(19) Europäisches Patentamt
European Patent Office
Office européen des brevets

(11) **EP 2 527 802 B1**

(12) **EUROPÄISCHE PATENTSCHRIFT**

(45) Veröffentlichungstag und Bekanntmachung des Hinweises auf die Patenterteilung:
**18.12.2019  Patentblatt 2019/51**

(21) Anmeldenummer: **11167953.6**

(22) Anmeldetag: **27.05.2011**

(51) Int Cl.:
*G01F 23/28* *(2006.01)*    *G01F 23/00* *(2006.01)*
*G01S 13/08* *(2006.01)*    *G01S 15/08* *(2006.01)*
*G06F 17/11* *(2006.01)*

(54) **Vorrichtung und Verfahren zur Ermittlung von Medien- und Behältereigenschaften**

Method and device for determining media and container characteristics

Dispositif et procédé de détermination de caractéristiques de milieux et de récipients

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.11.2012  Patentblatt 2012/48**

(73) Patentinhaber: **VEGA Grieshaber KG**
**77709 Wolfach (DE)**

(72) Erfinder:
• **Griessbaum, Karl**
**77796 Mühlenbach (DE)**
• **Welle, Roland**
**77709 Oberwolfach (DE)**

(74) Vertreter: **Maiwald Patent- und Rechtsanwaltsgesellschaft mbH Elisenhof**
**Elisenstraße 3**
**80335 München (DE)**

(56) Entgegenhaltungen:
**EP-A1- 2 309 235**      **EP-A2- 1 191 315**
**DE-A1-102007 060 579**

**Beschreibung**

Gebiet der Erfindung

Die vorliegende Erfindung betrifft die Füllstandmessung. Insbesondere betrifft die Erfindung ein Füllstandmessgerät zur Bestimmung der Position eines Füllstandes eines Füllgutes und/oder einer Trennschicht zwischen zwei Füllgütern in einem Behälter zur Ermittlung von Medien- und Behältereigenschaften bei der Messung von Füllständen aller Art, ein entsprechendes Verfahren, ein Programmelement und ein computerlesbares Medium.

Technischer Hintergrund der Erfindung

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf, und leitet daraus die Lage oder Position einer Oberfläche zumindest eines der im Behälter befindlichen Füllgüter ab.

Bei der Verwendung akustischer oder optischer Wellen breitet sich das vom Füllstandmessgerät erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht, als auch eine Ausbreitung im Inneren eines Hohlleiters, welcher die Radarwellen vom Füllstandmessgerät zum Medium führt. Bei Geräten nach dem Prinzip der geführten Mikrowelle werden die hochfrequenten Signale entlang eines Wellenleiters zum Medium hin geführt.

An der Oberfläche des zu vermessenden Mediums oder Füllguts wird ein Teil der ankommenden Signale reflektiert, und gelangt nach entsprechender Laufzeit wieder zurück zum Füllstandmessgerät. Die nicht reflektierten Signalanteile dringen in das Medium ein, und breiten sich entsprechend den physikalischen Eigenschaften des Mediums in diesem weiter in Richtung des Behälterbodens aus. Am Behälterboden werden auch diese Signale reflektiert, und gelangen nach Passage des Mediums und der überlagerten Atmosphäre wieder zurück zum Füllstandmessgerät.

Das Füllstandmessgerät empfängt die an verschiedenen Stellen reflektierten Signale und bestimmt daraus nach bekannten Verfahren die Distanz zum Füllgut.

Die bestimmte Distanz zum Füllgut wird nach außen hin bereitgestellt. Die Bereitstellung kann in analoger Form (4..20 mA Schnittstelle) oder auch in digitaler Form (Feldbus) realisiert werden.

Allen Verfahren gemein ist, dass sich das zur Messung verwendete Signal auf dem Weg vom Füllstandmessgerät hin zur Füllgutoberfläche im Normalfall im Einflussbereich eines weiteren Mediums befindet, welches nachfolgend als Überlagerungsmedium bezeichnet werden soll. Dieses Überlagerungsmedium befindet sich zwischen dem Füllstandmessgerät und der Oberfläche des zu vermessenden Mediums, und wird im Allgemeinen durch eine Flüssigkeit oder eine gasförmige Atmosphäre dargestellt.

In der überwiegenden Zahl an Anwendungsfällen befindet sich oberhalb des zu vermessenden Mediums Luft. Da sich die Ausbreitung elektromagnetischer Wellen in Luft nur unwesentlich von der in Vakuum unterscheidet, bedarf es keiner besonderen Korrekturen der Signale, welche vom Füllgut, den Behältereinbauten und dem Behälter selbst durch die Luft hindurch zum Füllstandmessgerät zurück reflektiert werden.

In Prozessbehältern der chemischen Industrie können weiterhin aber viele Arten von chemischen Gasen und Gasgemischen als Überlagerungsmedium auftreten. In Abhängigkeit von den physikalischen Eigenschaften dieser Gase oder Gasgemische werden die Ausbreitungseigenschaften elektromagnetischer Wellen im Vergleich zu einer Ausbreitung im Vakuum oder in Luft verändert.

Die bekannten Ansätze zur Ermittlung von Medien- und Behältereigenschaften weisen oft deutliche Schwächen auf.

Zusammenfassung der Erfindung

Es ist eine Aufgabe der Erfindung, eine robustes Verfahren und eine Vorrichtung zur Ermittlung von Medien- und Behältereigenschaften bereitzustellen. Weiterhin ist es eine Aufgabe der Erfindung, ein Verfahren und eine Vorrichtung zur automatischen Ermittlung der Kenngrößen bei Trennschichtmessungen anzugeben.

Die Aufgabe der Erfindung wird durch die Merkmale der unabhängigen Ansprüche 1, 7, 8, und 9 gelöst.

Es sind ein Füllstandmessgerät zur Bestimmung der Position eines Füllstandes eines Füllgutes und/oder einer Trennschicht zwischen zwei Füllgütern, wie sie sich beispielsweise in einem Behälter befinden können, ein Verfahren zur Bestimmung der Position eines Füllstandes eines Füllgutes und/oder einer Trennschicht zwischen zwei Füllgütern, ein Programmelement und ein computerlesbares Medium gemäß den Merkmalen der unabhängigen Patentansprüche angegeben. Weiterbildungen der Erfindung ergeben sich aus den Unteransprüchen und der folgenden Beschreibung.

Gemäß einem ersten Aspekt der Erfindung ist ein Füllstandmessgerät zur Bestimmung der Position eines Füllstandes eines Füllgutes und/oder einer Trennschicht zwischen zwei Füllgütern (beispielsweise in einem Behälter) angegeben. Das Füllstandmessgerät weist eine Echokurvenerfassungseinrichtung zum Erfassen zumindest einer Echokurve, eine Echoidentifikationseinrichtung zur Identifikation von zumindest zwei Echos in einer oder mehreren der erfassten Echokurven und eine Geschwindigkeitsermittlungseinrichtung zur Ermittlung von Geschwindigkeitswerten der zumindest zwei Echos auf. Darüber hinaus ist eine Selbstlerneinrichtung vorgesehen, die zur automatischen Ermittlung eines Kennwertes ausgeführt ist, der die Domschachtlänge eines Domschachts des Behälters, die Behälterhöhe des Behälters, die Permeabilitätszahl eines Füllgutes und/oder die Permittivitätszahl eines Füllgutes betrifft. Darüber hinaus ist die Selbstlerneinrichtung zur Ermittlung des Kennwertes unter Verwendung zumindest eines der ermittelten Geschwindigkeitswerte der Echos ausgeführt.

In anderen Worten kann die Selbstlerneinrichtung unter Verwendung eines oder mehrerer Geschwindigkeitswerte des bzw. der Echos die Domschachtlänge, die Behälterhöhe, die Permeabilitätszahl des oder eines der Füllgüter und/oder die Permittivitätszahl des oder eines der Füllgüter berechnen.

Gemäß einem weiteren Aspekt der Erfindung kann eine

Mehrfachechoerkennungseinrichtung zumindest ein Echo einer Mehrfachreflexion an einer Füllgutoberfläche eines Füllgutes, einer Störstelle und/oder an einem Behälterboden des Behälters in der Echokurve als Mehrfachecho klassifizieren. Hierbei ist die Selbstlerneinrichtung zur Verwendung zumindest eines Geschwindigkeitswertes eines von der Mehrfachechoerkennungseinrichtung klassifizierten Mehrfachechos zur Ermittlung des Kennwertes ausgeführt.

Gemäß einem weiteren Aspekt der Erfindung kann eine

Bodenechoerkennungseinrichtung zur Klassifizierung zumindest eines Echos einer Reflexion an einer Störstelle und/oder einem Behälterboden in der Echokurve als Bodenecho ausgeführt sein, wobei die Selbstlerneinrichtung zur Verwendung zumindest eines Geschwindigkeitswertes eines von der Bodenechoerkennungseinrichtung klassifizierten Bodenechos oder eines Trennschichtechos zur Ermittlung des Kennwertes ausgeführt ist.

Darüber hinaus kann, gemäß einem weiteren Aspekt der Erfindung, die Selbstlerneinrichtung das Produkt aus der Permeabilitätszahl des Füllgutes und der Permittivitätszahl des Füllgutes durch Anwendung der folgenden Formel

$$\frac{\varepsilon_M \cdot \mu_M}{\varepsilon_L \cdot \mu_L} = \left(1 + \left|\frac{V_B}{V_L}\right|\right)^2$$

ermitteln, wobei $\varepsilon_M$ die Permittivitätszahl des Füllgutes, $\varepsilon_L$ die Permittivitätszahl einer Überlagerungsatmosphäre, $\mu_M$ die Permeabilitätszahl des Füllgutes, $\mu_L$ die Permeabilitätszahl der Überlagerungsatmosphäre, $V_B$ die Geschwindigkeit eines Bodenechos und $V_L$ die Geschwindigkeit eines Füllgutechos beschreiben.

Auch ist es möglich, dass, gemäß einem weiteren Aspekt der Erfindung, die Selbstlerneinrichtung zur Ermittlung der Behälterhöhe des Behälters aus einem Schnittpunkt eines Geschwindigkeitsvektors eines Füllgutechos und eines Geschwindigkeitsvektors eines Bodenechos ausgeführt ist.

Gemäß einem weiteren Aspekt der Erfindung kann die Selbstlerneinrichtung zur Ermittlung der Domschachtlänge des Behälters aus zumindest einem Schnittpunkt der Geschwindigkeitsvektoren zumindest zweier Mehrfachechos ausgeführt sein. Gemäß einem weiteren Aspekt der Erfindung kann die Selbstlerneinrichtung zur Ermittlung der Permittivitätszahl des Füllgutes und/oder eines weiteren Mediums in dem Behälter anhand der Geschwindigkeitswerte der zumindest zwei Echos ausgeführt sein.

Beispielsweise ist es möglich, dass die Selbstlerneinrichtung zur Ermittlung der Permittivitätszahl des Füllgutes und/oder eines weiteren Mediums in dem Behälter anhand der Positionen der zumindest zwei Echos ausgeführt ist.

Gemäß einem weiteren Aspekt der Erfindung kann das Füllstandmessgerät zur Ermittlung der Permittivitätszahl und der Permeabilitätszahl des Füllgutes und/oder eines weiteren Mediums im Behälter anhand einer einzigen Laufzeitmessung ausgeführt sein.

Gemäß einem weiteren Aspekt der Erfindung ist ein Verfahren zur Bestimmung der Position eines Füllstandes, eines Füllgutes und/oder einer Trennschicht zwischen zwei Füllgütern, beispielsweise in einem Behälter, angegeben, bei dem zunächst zumindest eine Echokurve erfasst wird und dann ein oder mehr Echos in einer oder mehreren der erfassten Echokurven identifiziert werden.

Daraufhin erfolgt die Ermittlung von Geschwindigkeitswerten der zumindest zwei Echos. Weiterhin werden ein oder mehrere Kennwerte, bei denen es sich um eine Domschachtlänge, eine Behälterhöhe, eine Permeabilitätszahl eines Füllgutes oder eine Permittivitätszahl eines Füllgutes handelt, ermittelt. Für diese Ermittlung wird zumindest einer der ermittelten Geschwindigkeitswerte der Echos verwendet.

Gemäß einem weiteren Aspekt der Erfindung ist ein Programmelement angegeben, das, wenn es auf einem Prozessor eines Füllstandmessgeräts ausgeführt wird, den Prozessor anleitet, die oben und/oder im Folgenden beschriebenen Schritte durchzuführen.

Gemäß einem weiteren Aspekt der Erfindung ist ein computerlesbares Medium zum Speichern eines Programmelements angegeben, das, wenn es auf einem Prozessor eines Füllstandmessgeräts ausgeführt wird, den Prozessor anleitet, die oben und/oder im Folgenden beschriebenen Schritte durchzuführen.

An diesem Punkt ist zu beachten, dass die oben und im Folgenden genannten Merkmale hinsichtlich des Füllstandmessgeräts auch als Verfahrensschritte in dem erfindungsgemäßen Verfahren implementiert werden können, und umgekehrt.

Das Programmelement (Computerprogrammelement genannt) kann Teil einer Software sein, die auf einem Prozessor des Füllstandmessgerätes gespeichert ist. Der Prozessor kann dabei ebenso Gegenstand der Erfindung sein. Weiterhin umfasst dieser Aspekt der Erfindung ein Computerprogrammelement, welches schon von Anfang an die Erfindung verwendet, sowie auch ein Computerprogrammelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren

Fig. 1 zeigt ein Füllstandmessgerät, das nach einem Laufzeitverfahren arbeitet.

Fig. 2 zeigt Verfahrensschritte zur Bestimmung des Füllstandes nach einem Laufzeitverfahren.

Fig. 3 zeigt eine Vorrichtung zur mittelbaren Füllstandmessung.

Fig. 4 zeigt ein Beispiel für eine Füllstandmessung mit Mehrfachechos.

Fig. 5 zeigt ein Beispiel für eine Füllstandmessung in einem Domschacht.

Fig. 6 zeigt ein Beispiel für eine Füllstandmessung ohne Behälterdeckel.

Fig. 7 zeigt ein Füllstandmessgerät gemäß einem Ausführungsbeispiel der Erfindung.

Fig. 8 zeigt Messzyklen mit einem Füllstandmessgerät gemäß einem Ausführungsbeispiel der Erfindung.

Fig. 9 zeigt ein Verfahren zur Bestimmung einer Domschachtlänge gemäß einem Ausführungsbeispiel der Erfindung.

Fig. 10 zeigt ein Verfahren zur Bestimmung der Behälterhöhe gemäß einem Ausführungsbeispiel der Erfindung.

Fig. 11 zeigt ein Füllstandmessgerät zur Trennschichtmessung gemäß einem Ausführungsbeispiel der Erfindung.

Fig. 12 zeigt eine Trennschichtmessung mit konstanter Distanz zu einer Trennschicht gemäß einem Ausführungsbeispiel der Erfindung.

Fig. 13 zeigt eine Trennschichtmessung mit konstanter Distanz zu einer Füllgutoberfläche gemäß einem Ausführungsbeispiel der Erfindung.

Fig. 14 zeigt eine Trennschichtmessung mit konstanter Dicke des oberen Mediums gemäß einem Ausführungsbeispiel der Erfindung.

Definierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugzeichen verwendet, so bezeichnen diese gleiche oder ähnliche Elemente. Gleiche oder ähnliche Elemente können aber auch durch unterschiedliche Bezugzeichen bezeichnet sein.

Es sei darauf hingewiesen, dass der Begriff "Füllgutecho" gleichbedeutend ist mit einem Mehrfachecho 0. Ordnung der Füllgutreflexion.

Weiterhin sei daraufhingewiesen, dass der Begriff "Bodenecho" gleichbedeutend ist mit einem Mehrfachecho 0. Ordnung der Bodenreflexion.

Die nachfolgenden Ausführungen konzentrieren sich auf die Betrachtung des häufig anzutreffenden Anwendungsfalls eines einzigen zu vermessenden Mediums oder Füllguts in einem Behälter. Die im Folgenden beschriebene technische Lehre kann auf den Anwendungsfall zweier oder mehrerer verschiedener Medien oder Füllgüter in einem Behälter übertragen werden. Die Position einer Füllgutoberfläche mag im Zusammenhang mit einer Trennschichtmessung insbesondere auch die Position einer Trennschicht zwischen zwei unterschiedlichen Medien oder Füllgütern sein, welche identisch ist mit der Position der Füllgutoberfläche des unteren der beiden Füllgüter oder Medien in einem Behälter zur Trennschichtmessung.

In Geräten zur Füllstandmessung können verschiedene Verfahren zur Anwendung kommen, nach denen die Position einer Füllgutoberfläche in einem Behälter ermittelt werden kann.

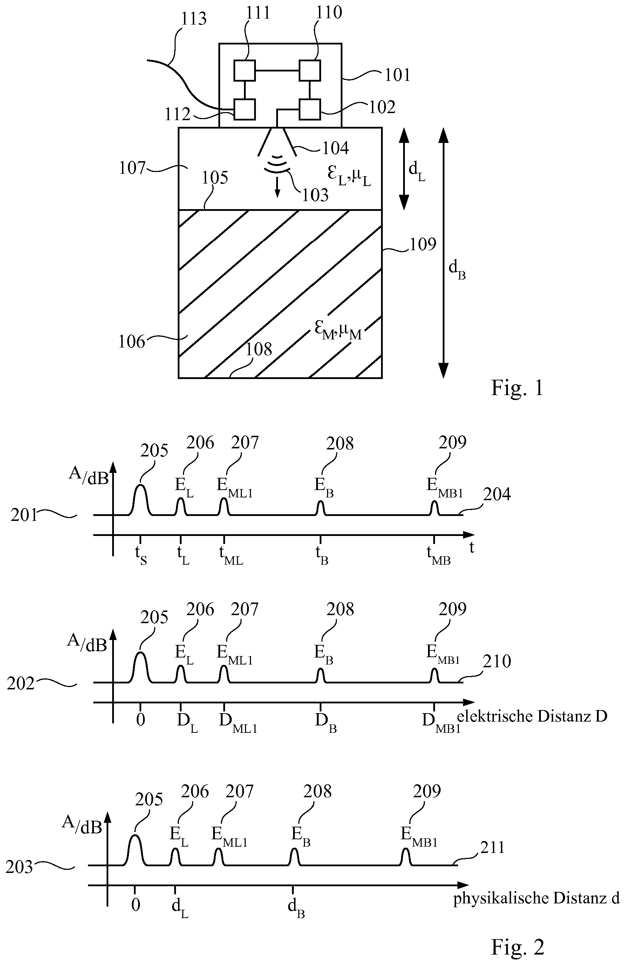

Figur 1 zeigt eine Anordnung zur Füllstandmessung. Der Behälter 100 ist bis zu einer Füllhöhe $d_B - d_L$ mit einer Flüssigkeit 106 gefüllt. Der Raum 107 über der Flüssigkeit sei beispielsweise mit Luft gefüllt. Im vorliegenden Beispiel wird die Flüssigkeit mit Luft als Überlagerungsmedium bedeckt.

Das Füllstandmessgerät 101 erzeugt mit Hilfe einer Hochfrequenzeinrichtung 102 einen elektromagnetischen Impuls 103 und koppelt diesen in eine geeignete Antenne 104 ein, woraufhin sich dieser Impuls annähernd mit Lichtgeschwindigkeit in Richtung der zu vermessenden Füllgutoberfläche 105 ausbreitet. Die exakte Geschwindigkeit innerhalb des Überlagerungsmediums ergibt sich durch:

$$c_L = \frac{c_0}{\sqrt{\varepsilon_L \cdot \mu_L}}$$

wobei $c_O$ die Lichtgeschwindigkeit im Vakuum, $\varepsilon_L$ die Permittivitätszahl des Überlagerungsmediums und $\mu_L$ die Permeabilitätszahl des Überlagerungsmediums beschreibt.

Die Füllgutoberfläche 105 reflektiert einen Teil der ankommenden Signalenergie, woraufhin sich der reflektierte Signalanteil wieder zurück zum Füllstandmessgerät 101 fortpflanzt. Der nicht reflektierte Signalanteil dringt in die Flüssigkeit 106 ein, und breitet sich darin mit stark verminderter Geschwindigkeit in Richtung des Behälterbodens aus. Die Geschwindigkeit $c_M$ der elektromagnetischen Welle 103 innerhalb der Flüssigkeit 106 wird durch die Materialeigenschaften der Flüssigkeit 106 bestimmt:

$$c_M = \frac{c_O}{\sqrt{\varepsilon_M \cdot \mu_M}}$$

wobei $c_O$ die Lichtgeschwindigkeit im Vakuum, $\varepsilon_M$ die Permittivitätszahl der Flüssigkeit und $\mu_M$ die Permeabilitätszahl der Flüssigkeit beschreibt. Am Boden 108 des Behälters 109 wird der verbliebene Signalanteil ebenfalls reflektiert, und gelangt nach entsprechender Laufzeit wieder zurück zum Füllstandmessgerät 101. Im Füllstandmessgerät werden die ankommenden Signale mit Hilfe der Hochfrequenzeinrichtung 102 aufbereitet, und vorzugsweise in einen niederfrequenteren Zwischenfrequenzbereich transformiert. Mit Hilfe einer Analog-Digital-Wandlereinheit 110 werden die analogen Echokurven, welche von der Hochfrequenzeinrichtung 102 bereitgestellt werden, digitalisiert und einer Auswerteeinrichtung 111 zur Verfügung gestellt.

Die vorgenannten Komponenten, welche zur Bereitstellung einer digitalisierten Echokurve genutzt werden, also insbesondere die Hochfrequenzeinrichtung 102 und die Analog-Digital-Wandlereinheit 110, mögen beispielhaft eine Echokurvenerfassungseinrichtung definieren.

Die Auswerteeinrichtung 111 analysiert die digitalisierte Echokurve, und bestimmt auf Basis der darin enthaltenen Echos nach bekannten Verfahren dasjenige Echo, das von der Reflektion an der Füllgutoberfläche 105 erzeugt wurde. Zudem bestimmt die Auswerteeinrichtung die exakte elektrische Distanz bis zu diesem Echo. Weiterhin wird die ermittelte elektrische Distanz zum Echo derart korrigiert, dass Einflüsse des Überlagerungsmediums 107 auf die Ausbreitung der elektromagnetischen Wellen kompensiert werden. Die so errechnete, kompensierte Distanz zum Füllgut wird einer Ausgabeeinrichtung 112 übergeben, welche den bestimmten Wert entsprechend den Vorgaben des Benutzers weiter aufbereitet, beispielsweise durch Linearisierung, Offsetkorrektur, Umrechnung in eine Füllhöhe $d_B - d_L$. Der aufbereitete Messwert wird an einer externen Kommunikationsschnittstelle 113 nach außen hin bereitgestellt. Hierbei können alle etablierten Schnittstellen verwendet werden, insbesondere 4..20 mA - Stromschnittstellen, industrielle Feldbusse wie HART, Profibus, FF, oder aber auch Computerschnittstellen wie RS232, RS485, USB, Ethernet, FireWire.

Figur 2 verdeutlicht nochmals im Detail wichtige Schritte, die im Rahmen der Echosignalverarbeitung in der Auswerteeinrichtung 111 zur Kompensation der Einflüsse verschiedener Medien angewendet werden können.

Der Kurvenzug 201 zeigt zunächst die von der Analog-Digital-Wandlereinheit 110 über der Zeit hinweg erfasste Echokurve 204. Die Echokurve beinhaltet zunächst den innerhalb der Antenne reflektierten Anteil des Sendeimpulses 205. Kurze Zeit später wird zum Zeitpunkt $t_L$ ein erstes Echo 206 erfasst, welches durch die Reflexion von Signalanteilen an der Grenzfläche 105 oder Oberfläche 105 des Mediums 106 im Behälter verursacht wird. Eine weiteres Echo 207 entsteht als erstes Vielfachecho des Füllgutechos 206, und wird zum Zeitpunkt $t_{ML}$ erfasst. Die in das Medium 106 eindringenden Signalanteile werden nach Durchlaufen des Füllguts 106 am Behälterboden 108 reflektiert, und erzeugen ein weiteres Echo 208 innerhalb der Echokurve 204. Dieses Bodenecho 208 wird zum Zeitpunkt $t_B$ erfasst. Weiterhin möge zum Zeitpunkt $t_{MB}$ ein Vielfachecho 209 des Bodenechos erfasst werden.

In einem ersten Verarbeitungsschritt wird die zeitabhängige Kurve 201 in eine distanzabhängige Kurve 202 transformiert. Während dieser Transformation wird davon ausgegangen, dass sich die erfasste Kurve ausschließlich durch eine Ausbreitung im Vakuum gebildet hat. Die Ordinate der Darstellung 201 wird durch Multiplikation mit der Lichtgeschwindigkeit im Vakuum in eine Distanzachse umgerechnet. Zudem wird durch Verrechnung eines Offsets erreicht, dass das von der Antenne 104 verursachte Echo 205 den Distanzwert 0m erhält. Weiterhin werden die Distanzwerte mit dem Faktor 0.5 multipliziert, um den doppelten Weg hin zur Füllgutoberfläche und zurück zu kompensieren.

Die zweite Darstellung 202 zeigt die Echokurve als Funktion der elektrischen Distanz D. Die elektrische Distanz entspricht der halben Distanz, die eine elektromagnetische Welle im Vakuum in einer bestimmten Zeit zurücklegt. Die elektrische Distanz berücksichtigt keinerlei Einflüsse eines Mediums, welche möglicherweise zu einer langsameren Ausbereitung der elektromagnetischen Wellen führen. Kurvenzug 202 stellt daher eine unkompensierte, aber auf Orte bezogene Echokurve dar.

In der vorliegenden Beschreibung werden elektrische Distanzen immer mit Großbuchstaben D bezeichnet, wohingegen physikalische Distanzen, welche direkt am Behälter nachgemessen werden können, mit kleinen Buchstaben $d$ bezeichnet werden.

Es mag weiterhin möglich sein, die Echokurve 210 vollständig zu kompensieren. Die dritte Darstellung 203 zeigt eine vollkompensierte Echokurve 211. Um eine Darstellung der Echos über der physikalischen Distanz zu erreichen, muss im vorliegenden Fall der Einfluss des Überlagerungsmediums 107 im Bereich zwischen den Orten 0 und $D_L$ (Kurvenzug 202) berücksichtigt werden. Die elektrischen Distanzangaben der Abszisse müssen zwischen 0 und $D_L$ in physikalische Distanzangaben gemäß folgendem Zusammenhang umgerechnet werden:

$$d_i = \frac{D_i}{\sqrt{\varepsilon_L \cdot \mu_L}}$$

Da $\varepsilon_L$ und $\mu_L$ für Luft in guter Näherung dem Wert 1 entsprechen, muss für diesen Abschnitt im vorliegenden Beispiel keine Korrektur erfolgen. Die elektrischen Distanzangaben der Abszisse größer gleich $D_L$ müssen jedoch in physikalische Distanzangaben gemäß folgendem Zusammenhang umgerechnet werden:

$$d_i = d_L + \frac{(D_i - D_L)}{\sqrt{\varepsilon_M \cdot \mu_M}}$$

Die dritte Darstellung 203 zeigt schließlich den korrigierten Verlauf. Sowohl die Distanz zum Echo 206 der Füllgutoberfläche 105 als auch die Distanz zu dem vom Behälterboden 108 erzeugten Echo 208 stimmen mit den am Behälter 109 nachmessbaren Distanzen überein. Die Distanz zum Mehrfachecho 207 der Füllgutoberfläche kann nicht direkt am Behälter nachgemessen werden, da obige Kompensation nur für direkte Reflektionen gültig ist. Gleiches gilt für das Mehrfachecho 209 der Reflektion am Behälterboden 108.

Es sei an dieser Stelle daraufhingewiesen, dass die Umsetzung in Kurvenzug 202, also die Bestimmung der elektrischen Distanzen verschiedener Echos, im Rahmen der Signalverarbeitung im Gerät vorzugsweise für alle Echos durchgeführt werden kann. Die Umsetzung der Echokurve in eine kompensierte Echokurve wird im Allgemeinen nicht durchgeführt, genügt doch die Korrektur eines einzelnen Distanzwertes zur Füllgutoberfläche.

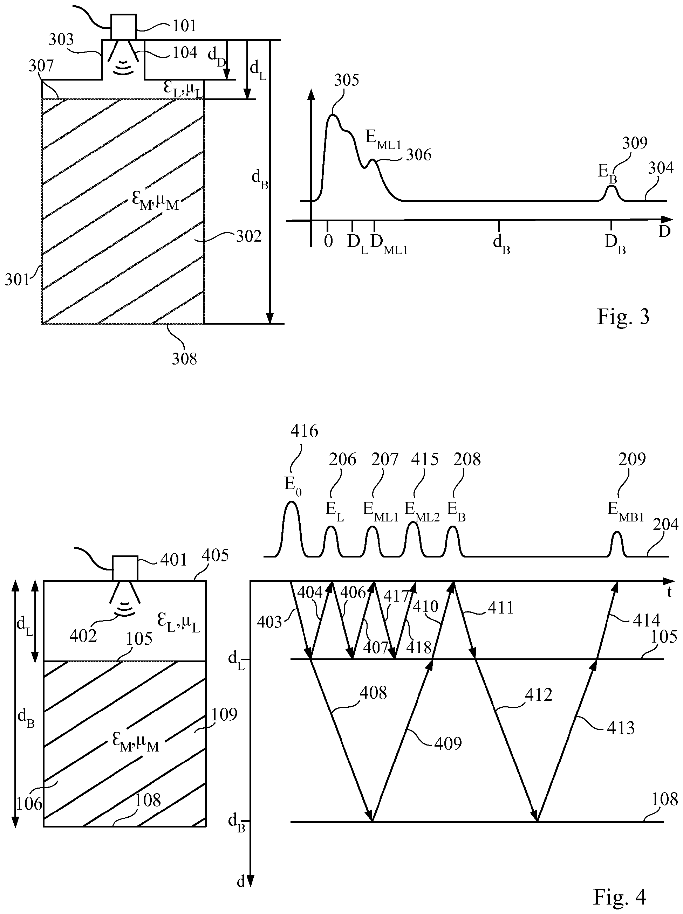

Figur 3 stellt die Verwendung einer indirekten oder mittelbaren Bestimmung der Lage der Füllgutoberfläche anhand eines Bodenechos anschaulich dar. Der dargestellte Behälter 301 ist nahezu vollständig mit dem Füllgut 302 gefüllt. Im Gegensatz zum Behälter 109 aus Figur 1 möge das Füllstandmessgerät 101 im Behälter 301 der Figur 3 in einem Domschacht 303 montiert sein. Bei einem Domschacht mag es sich um einen Schacht handeln, über den der Tank befüllt werden kann. Ein Domschacht mag auch durch eine Zustiegsmöglichkeit für Bedienpersonal, ein sogenanntes Mannloch, realisiert sein. Weiterhin mag es auch möglich sein, einen Domschacht für andere Zwecke zu benutzen. In dem sog. Dom im Scheitel der Tanks kann u. a. das Füllstandmessgerät angebracht sein.

Die vom Füllstandmessgerät 101 erfasste Echokurve 304 weist neben dem von der Antenne 104 erzeugten Echo 305 lediglich eine Mehrfachreflektion $E_{ML1}$ 306 der Füllgutoberfläche 307 sowie das vom Behälterboden 308 erzeugte Bodenecho 309 auf. Das von der Oberfläche 307 des Mediums erzeugte Echo kann anhand der erfassten Echokurve 304 nicht sicher detektiert werden, da es im Einflussbereich des Antennenechos 305 von diesem komplett überdeckt wird. Auf konventionelle Art lässt sich die Entfernung $d_L$ zur Füllgutoberfläche nicht ermitteln.

Die Position der Füllgutoberfläche kann mittelbar gemessen werden, so dass die Lage $d_L$ der Füllgutoberfläche gemäß folgender Gleichung aus der elektrischen Distanz $D_B$ des Bodenechos ermittelt werden kann:

$$d_L = \frac{d_B \cdot \sqrt{\varepsilon_M \cdot \mu_M} - D_B}{\sqrt{\varepsilon_M \cdot \mu_M} - \sqrt{\varepsilon_L \cdot \mu_L}}$$

In einer Vielzahl praktischer Anwendungen kann aufgrund der hohen Dämpfungswerte die Signale im Medium das Bodenecho 309 in der Echokurve nicht mehr detektiert werden.

Auch kann aus der Lage eines Vielfach- oder Mehrfachechos $E_{ML1}$ 306 auf die Lage $d_L$ der Füllgutoberfläche geschlossen werden:

$$d_L = \frac{D_{ML1} + \sqrt{\varepsilon_L \cdot \mu_L} \cdot N \cdot d_D}{(1 + N) \cdot \sqrt{\varepsilon_L \cdot \mu_L}}$$

wobei N die Ordnung des Mehrfachechos an der Distanz $D_{ML1}$ angibt.

Auch können Mehrfach- und Bodenechos erkannt werden, indem die Geschwindigkeitswerte und/oder die Positionen von mehreren Echos einer Echokurve analysiert werden.

Grundlegende Voraussetzung für die Durchführung einer mittelbaren Messung ist die Kenntnis der Permittivitäts- und Permeabilitätszahlen der im Behälter 301 enthaltenen Medien sowie die Kenntnis der geometrischen Abmessungen des Behälters, insbesondere der Domschachtlänge $d_D$ sowie der erweiterten Behälterhöhe $d_B$ oder der Behälterhöhe $d_b$ - $d_D$.

Figur 4 verdeutlicht die physikalischen Zusammenhänge, welche zur Ausbildung von Mehrfachechos führen mögen.

Das Füllstandmessgerät 401 erzeugt nach bekannten Verfahren einen elektromagnetischen Impuls 402 und sendet diesen in Richtung der zu vermessenden Füllgutoberfläche 105 aus. Der Signalpfeil 403 skizziert die Ausbreitung des Signals als Funktion der physikalischen Distanz über der Zeit. An der Oberfläche des Füllgutes 105 wird ein Teil des Sendesignals reflektiert und gelangt nach entsprechender Laufzeit zurück zum Füllstandmessgerät. Signalpfad 404 verdeutlicht diesen Ausbreitungsweg. Das Füllstandmessgerät bildet aufgrund der empfangenen Signale eine Echokurve 204, welche bedingt durch die Signalpfade 403 und 404 ein erstes Echo $E_L$ 206 aufweist. Ein Teil der Signale wird beispielsweise an der Behälterdecke 405 oder am Füllstandmessgerät 401 erneut reflektiert, und breitet sich in Richtung der Füllgutoberfläche 105 aus, was durch den Signalpfeil 406 angedeutet wird. Dieser Signalanteil wird von der Füllgutoberfläche erneut reflektiert, und gelangt nach entsprechender Laufzeit zurück zum Füllstandmessgerät 401, wo er als erstes Mehrfachecho $E_{ML1}$ 207 der Füllgutreflexion erfasst und auf die Echokurve 204 abgebildet wird. Signalpfad 407 verdeutlicht den Vorgang.

Ein Teil der abgestrahlten Signalenergie 402, welcher nicht an der Füllgutoberfläche 105 reflektiert wird, dringt in das Medium 106 ein und breitet sich in diesem in Richtung des Behälterbodens 108 mit verminderter Geschwindigkeit weiter aus 408. Am Behälterboden wird das Signal reflektiert, und gelangt nach entsprechender Laufzeit zurück zum Füllstandmessgerät. Die Signalpfade 409 und 410 verdeutlichen die Ausbreitung des Signals auf diesem Pfad. Es ist zu beachten, dass sich das Signal in den verschiedenen Medien mit unterschiedlichen Geschwindigkeiten ausbreitet, was sich im Signalpfaddiagramm durch unterschiedliche Steigungen der Signalpfade 409, 410 erkennen lässt. Das Füllstandmessgerät empfängt die vom Behälterboden reflektierten Signalanteile, und bildet diese in Form eines Bodenechos $E_B$ 208 in der Echokurve 204 ab. Analog zur Bildung von Mehrfachechos 207, 415 der Füllgutreflexion kann unter günstigen Verhältnissen auch die Ausbildung eines oder mehrerer Mehrfachechos des Bodenechos beobachtet werden. Die Signalpfade 411, 412, 413, 414 verdeutlichen das Zustandekommen eines ersten Mehrfachechos $E_{MB1}$ 209 des Bodenechos $E_B$ 208, welches sich in der vom Füllstandmessgerät empfangenen Echokurve 204 nach entsprechender Laufzeit ebenfalls abbildet.

Grundsätzlich ist es möglich, Mehrfachechos höherer Ordnung zu konstruieren. Das Signalpfaddiagramm zeigt hierzu die Signalpfade 417 und 418, welche geeignet sind, ein Mehrfachecho $E_{ML2}$ 415 zweiter Ordnung bezogen auf die Reflektion der Füllgutoberfläche zu erzeugen. Entsprechende Mehrfachechos höherer Ordnung sind auch für die Reflektion des Behälterbodens möglich. Es mag einem Fachmann keine Probleme bereiten, die Aspekte der vorliegenden Erfindung, welche nachfolgend anhand der Mehrfachechos erster Ordnung dargestellt werden, auf Mehrfachechos höherer Ordnung zu übertragen. Die Ordnung eines Mehrfachechos sei definiert als die Anzahl der Reflexionen eines ausgesendeten Signals an einer Medienoberfläche eines im Behälter zu messenden Füllguts, reduziert um 1. Das Echo $E_L$ ist entsprechend dieser Nomenklatur identisch einem Mehrfachecho 0. Ordnung, wohingegen das Echo $E_{ML1}$ identisch einem Mehrfachecho 1. Ordnung ist.

Weiterhin sind auch gemischte Signalpfade denkbar, welche zu weiteren Echos innerhalb der empfangenen Echokurven führen. So mag es beispielsweise möglich sein, dass das Signal nach Durchlaufen des Signalpfades 406 in das Medium eindringt, und sich in Richtung des Behälterbodens ausbreitet. Weiterhin mag es beispielsweise auch möglich sein, dass ein Teil der Signalenergie nach Durchlaufen des Signalpfades 411 von der Füllgutoberfläche reflektiert wird, und sich wieder direkt in Richtung des Füllstandmessgerätes ausbreitet. Gemischte Signalpfade sollen im Rahmen der vorliegenden Erfindung nicht weiter betrachtet werden, da sie in der praktischen Anwendung nahezu keine Rolle spielen. Es mag einem Fachmann aber keine Probleme bereiten, die Aspekte der vorliegenden Erfindung, welche nachfolgend anhand der Mehrfachechos erster Ordnung dargestellt werden, auf gemischte Mehrfachechos zu übertragen. Gemischte Mehrfachechos seien im vorliegenden Kontext definiert als Echos einer Echokurve, welche durch Signalpfade verursacht werden, innerhalb derer sich ein vom Füllstandmessgerät erzeugtes Signal an zumindest zwei unterschiedlichen Grenzflächen zumindest eines in einem Behälter zu messenden Füllguts reflektiert. Vorliegendes Beispiel enthält kein gemischtes Mehrfachecho.

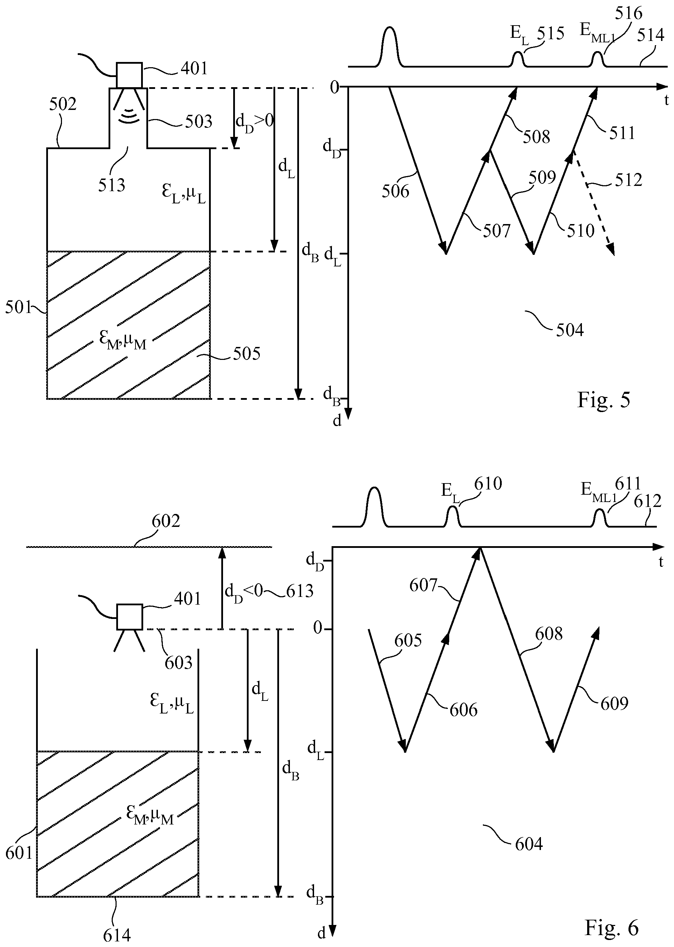

Wenig umfangreicher kann die Betrachtung beim Einsatz eines Füllstandmessgerätes in einem Behälter mit einem aufgebauten Domschacht werden. Figur 5 zeigt ein Beispiel für den Einsatz des erfindungsgemäßen Messgerätes 401 in einem solchen Behälter 501. Das Füllstandmessgerät wird nicht direkt auf Höhe der Behälterdecke 502 montiert, sondern befindet sich in einem Domschacht 503, welcher im Gegensatz zum Beispiel aus Figur 4 hier eine physikalische Länge von $d_D > 0$ aufweist. Die Montageposition des Füllstandmessgerätes im Domschacht beeinflusst die Ausbildung von Vielfachechos massiv. Das Signalpfaddiagramm 504 verdeutlicht die Ausbildung von Mehrfachechos im vorliegenden Fall. Das vom Füllstandmessgerät erzeugte Signal breitet sich zunächst durch den Domschacht 503 und den eigentlichen Behälter hin zur Oberfläche des Mediums 505 aus. Signalpfad 506 verdeutlicht diesen Signalpfad. Das Medium reflektiert das Signal, woraufhin sich dieses in Richtung des Füllstandmessgerätes 401 fortpflanzt. Da die Öffnung 513 des Domschachtes 503 im Verhältnis zur Behälterdecke 502 klein ist, wird nur ein sehr kleiner Teil des Signals als Füllstandecho $E_L$ 515 auf die Echokurve 514 abgebildet. Die Signalpfade 507 und 508 verdeutlichen diesen Ausbreitungsweg. Der weitaus größere Teil der Signalenergie wird an der Behälterdecke reflektiert (Signalpfad 509), und gelangt erneut zur Füllgutoberfläche. Auf diese Weise bildet sich nach Passage der Signalpfade 509, 510, und 511 ein erstes Vielfachecho $E_{ML1}$ 516 auf die Echokurve ab. Die vorgestellten Zusammenhänge für Domschächte gelten entsprechend auch für die Vielfachechos höherer Ordnung, was durch den Signalpfad 512 angedeutet wird, aber auch für die Vielfachechos der Bodenreflektion.

In industriellen Anwendungen finden sich darüber hinaus auch Konstellationen, die durch die Einführung einer negativen Domschachtlänge in vorteilhafter Weise verarbeitet werden können. Figur 6 zeigt einen zugehörigen Anwendungsfall. Das Füllstandmessgerät 401 wird oberhalb eines nach oben offenen Behälters 601 montiert, wobei sich die gesamte Messanordnung beispielsweise in einer Halle befindet, so dass sich über der Anordnung ein metallisches Flachdach 602 befinden möge. Der Abstand der Bezugsebene 603 des Füllstandmessgerätes 401 vom Hallendach 602 wird im Ablauf der Signalverarbeitung des Füllstandmessgerätes 401 als negative Domschachtlänge mit einer physikalischen Länge von $d_D < 0$ berücksichtigt. Die Anwendung möge daher im Kontext der vorliegenden Erfindung einen Domschacht aufweisen, wobei dieser eine negative Länge besitzen möge. Werden vom Füllstandmessgerät 401 nun Messungen vorgenommen, so ergeben sich Signalpfade gemäß der Darstellung des Signalpfaddiagramms 604. Die direkte Reflektion der Füllgutoberfläche, welche durch die Signalpfade 605 und 606 verdeutlicht wird, bildet sich in der Echokurve als Füllstandecho $E_L$ 610 ab. Der weitaus größere Teil der Signalenergie breitet sich jedoch bis zum Hallendach 602 aus, wird von diesem reflektiert und führt nach erneuter Reflektion an der Füllgutoberfläche zum ersten Mehrfachecho $E_{ML1}$ 611 innerhalb der Echokurve 612. Die Signalausbreitung, welche zu diesem Echo führt, wird durch die Signalpfade 607, 608 und 609 angedeutet.

In der praktischen Anwendung können die oben dargelegten Zusammenhänge zu Problemen bei der Messung des Füllstandes führen, insbesondere bei einer mittelbaren Messung. Die dargelegten Verfahren zur mittelbaren Bestimmung der Lage eines Füllguts gemäß Figur 3 benötigen die exakte Kenntnis einiger Behältereigenschaften wie der Behälterhöhe oder der Domschachtlänge, und darüber hinaus die Information über die Permeabilitäts- und Permittivitätszahlen der im Behälter enthaltenen Medien.

Neben einer manuellen Eingabe der benötigten Parameter durch den Benutzer können verschiedene Verfahren zur Ermittlung der Größen angewendet werden.

Viele dieser Verfahren ermitteln die Permittivität eines Mediums aus den messtechnisch ermittelten Positionen der Füllgutreflektion sowie der Bodenreflektion. Nachteilig an diesem Ansatz ist zum einen die Notwendigkeit, die Höhe des Behälters und ggf. auch die Höhe eines Domschachtes vorab zu kennen. Darüber hinaus ist die Ermittlung mit großen Ungenauigkeiten verbunden, da die messtechnisch ermittelten Einzelwerte durch Rauscheinflüsse verfälscht werden können.

Weiterhin ist die automatisierte Ermittlung der Behälterhöhe nur dann möglich, wenn neben der Permittivität der Medien im Behälter auch die Länge eines ggf. vorhandenen Domschachtes vorab bekannt ist.

Die Ansätze zur Bestimmung der Permittivität anhand einer Echoamplitude können in der Praxis unzuverlässig sein, da die Amplitude eines Echos durch Schüttlagen bei Schüttgütern oder auch durch Schaum bei Flüssigkeiten massiv beeinträchtigt werden kann.

Viele Ansätze zur Ermittlung von Medien- und Behältereigenschaften stellen demzufolge keine robusten Verfahren bereit, welche im Rahmen der Füllstandmessung unter realen Bedingungen zu Verbesserungen führen würden. Weiterhin ist es mit den vorgenannten Verfahren nicht möglich, eine automatische Ermittlung der Kenngrößen im Rahmen einer Trennschichtmessung durchzuführen.

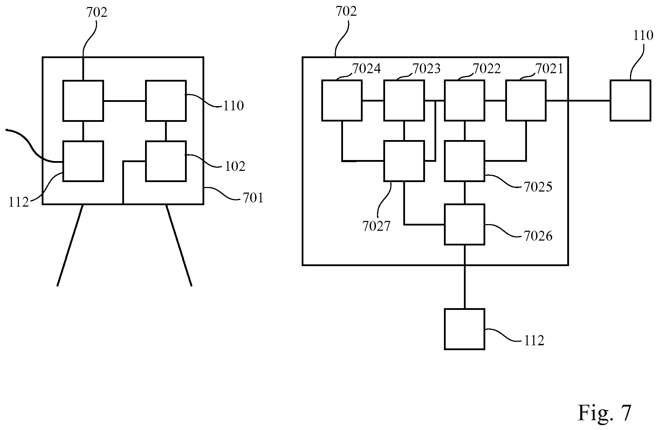

Das Blockdiagramm der Figur 7 zeigt ein Beispiel für Füllstandmessgerät und eine Vorrichtung zur Ermittlung von Medien- und Behältereigenschaften gemäß einem Ausführungsbeispiel der Erfindung.

Das Füllstandmessgerät 701 entspricht in weiten Teilen dem in Figur 1 gezeigten Füllstandmessgerät 101, unterscheidet sich jedoch durch eine modifizierte Auswerteeinrichtung 702 von den bislang genutzten Vorrichtungen.

Die Auswerteeinrichtung 702 möge eine Echoidentifikationseinrichtung 7021, eine Trackingeinrichtung 7022, eine Geschwindigkeitsermittlungseinrichtung 7023, eine Mehrfach- und Bodenechoerkennungseinrichtung 7024, eine Entscheidungseinrichtung 7025, eine Echovermessungseinrichtung 7026 sowie eine Selbstlerneinrichtung 7027 aufweisen oder daraus bestehen.

Die Echoidentifikationseinrichtung 7021 untersucht die von der Echokurvenerfassungseinrichtung 102, 110 übergebene Echokurve auf darin enthaltene Echos 205, 206, 207, 208, 209. Die Trackingeinrichtung 7022 nimmt eine Gruppierung von Echos aus verschiedenen Messzyklen derart vor, dass Echos, welche von der gleichen Reflexionsstelle im Behälter verursacht werden, und welche auf Grund gleicher Signalpfade entstehen, zu Gruppen zusammengefasst werden. Auf Basis dieser Gruppen, auch Tracks genannt, kann beispielsweise die Geschwindigkeit eines Echos sicher ermittelt werden. Die Geschwindigkeitsermittlungseinrichtung 7023 ermittelt zumindest eine Kennzahl für die Geschwindigkeit der Echos der aktuellen Echokurve. Die Mehrfach- und Bodenechoerkennungseinrichtung 7024 klassifiziert Mehrfachechos und Bodenechos.

Die Selbstlerneinrichtung 7027 mag auf Basis der identifizierten Echos, Tracks sowie der vorgenommenen Klassifizierung nach Boden- und Mehrfachechos in der Lage sein, Medien- und Behältereigenschaften automatisiert zu erlernen. Die Entscheidungseinrichtung 7025 mag auf Basis aller bislang ermittelten Werte eine Entscheidung treffen, welches Echo der Echokurve von der Füllgutreflektion erzeugt wurde. Anhand der Echovermessungseinrichtung 7026 kann die exakte Position des Echos ermittelt werden, beispielsweise durch die Verwendung automatisiert erfasster Kennwerte eines Mediums oder eines Behälters im Rahmen einer mittelbaren Messung. Weiterhin können Einflüsse eines Überlagerungsmediums kompensiert werden.

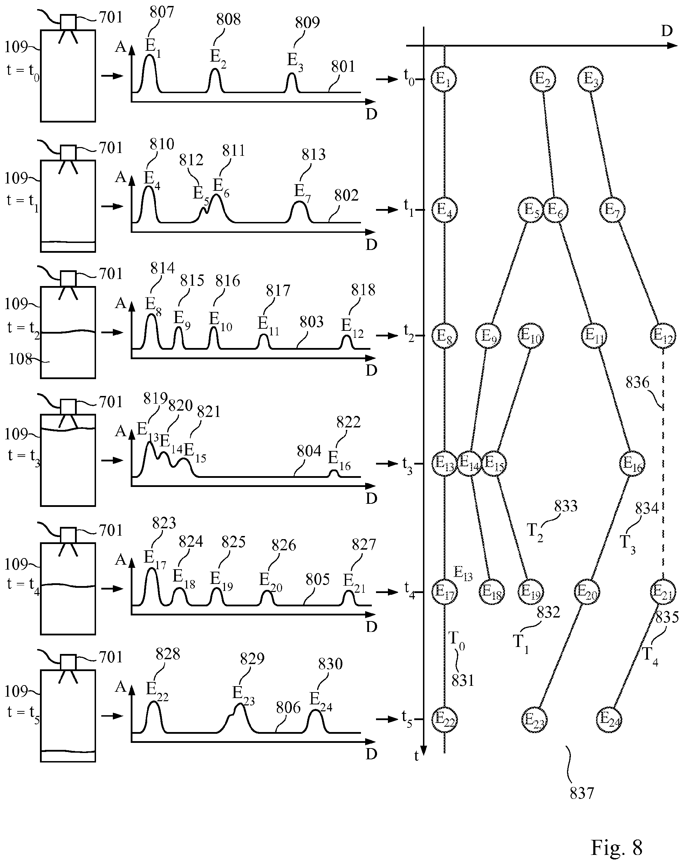

In den Darstellungen der Figur 8 wird eine Folge von Messzyklen dargestellt, wie sie mit einem erfindungsgemäßen Messgerät 701 durchgeführt werden können. Der zu überwachende Behälter 109 wird zu fortlaufenden Zeitpunkten $t_0 < t_1 < t_2 < t_3 < t_4 < t_5$ zunächst mit einem Medium 106 befüllt, und anschließend wieder entleert. Die von einem erfindungsgemäßen Füllstandmessgerät 701 zu den jeweiligen Zeitpunkten erfassten Echokurven 801, 802, 803, 804, 805, 806 sind direkt neben der Darstellung des Behälters zum jeweiligen Zeitpunkt skizziert.

Die Echokurve 801 des leeren Behälters 109 weist neben dem Antennenecho $E_1$ 807 lediglich ein vom Boden verursachtes Echo $E_2$ 808 und ein weiteres Vielfachecho $E_3$ 809 der Bodenreflexion auf. Diese Echos werden von der Echoidentifikationseinrichtung erfasst, wobei zu diesem Zeitpunkt noch keinerlei Klassifikation der Echos stattfindet. Die Echos werden daher vorzugsweise mit unterschiedlichen Indizes versehen, um sie algorithmisch weiter verarbeiten zu können.

Auf Basis der identifizierten Echos $E_1$ 807, $E_2$ 808 und $E_3$ 809 wird von der Trackingeinrichtung 7022 in einem weiteren Verarbeitungsschritt versucht, die identifizierten Echos in einen logischen Zusammenhang zu bereits früher identifizierten Echos zu stellen. Offenbarungen zur Durchführung eines Tracking-Verfahrens im Rahmen der Füllstandmesstechnik finden sich beispielsweise in WO 2009/037000. Die Trackingeinrichtung 7022 des Füllstandmessgerätes 701 möge auf Basis der Antennenreflektion $E_1$ einen ersten Track $T_0$ 831 initialisieren.

Weiterhin möge ein Track $T_3$ 834 zur Verfolgung des Bodenechos $E_2$ 808 sowie ein Track $T_4$ 835 zur Verfolgung des Vielfachechos $E_3$ 809 zum Zeitpunkt t = $t_0$ initialisiert werden.

Zum Zeitpunkt t = $t_1$ möge der Behälter leicht befüllt sein. Die vom Füllstandmessgerät erfasste Echokurve 802 ist in der Figur 8 dargestellt. Die Trackingeinheit des Füllstandmessgerätes 701 setzt die bereits begonnenen Tracks $T_0$ 831, $T_3$ 834 und $T_4$ 835 mit den jeweils von der gleichen Reflexionsstelle im Behälter stammenden Echos der aktuellen Messung fort. Weiterhin wird zur Überwachung des neu hinzugekommenen Füllstandechos $E_5$ 812 ein neuer Track $T_1$ 832 initialisiert.

Im weiteren Verlauf wird der Behälter zunehmend gefüllt. Zum Zeitpunkt t = $t_2$ möge der Behälter halb gefüllt sein. Entsprechend den Ausführungen zur Figur 2 bildet sich in diesem Stadium sowohl eine Mehrfachreflexion $E_{10}$ 816 der Füllgutoberfläche als auch eine Mehrfachreflexion $E_{12}$ 818 des Behälterbodens auf die erfasste Echokurve 80 ab. Die neu hinzugekommene Mehrfachreflexion der Füllgutoberfläche führt zur Neuinitialisierung eines Tracks $T_2$ 833, wohingegen die bereits bestehenden Tracks $T_0$ 831, $T_1$ 832, $T_3$ 834 und $T_4$ 835 mit den Echos der jeweils identischen Reflexionsstelle im Behälter fortgesetzt werden.

Der nahezu vollständig mit dem Medium 106 gefüllte Behälter wird zum Zeitpunkt t = t₃ dargestellt. Aufgrund der hohen Dämpfung der verwendeten Messsignale des Füllstandmessgerätes 701 innerhalb des Mediums 106 möge es nun nicht mehr möglich sein, die erste Mehrfachreflexion des Behälterbodens zu erfassen. Das Tracking-Verfahren ist jedoch in der Lage, das Fehlen dieses Echos zu berücksichtigen, beispielsweise durch Einfügen einer unsichtbaren Strecke 836 innerhalb des Tracks $T_4$ 835. Die anderen Tracks werden mit den erfassten Echos der Echokurve 804 gemäß obiger Beschreibung erweitert.

Während der anschließenden Entleerung des Behälters taucht die erste Mehrfachreflexion $E_{21}$ 827 des Behälterbodens zum Zeitpunkt t = t₄ wieder auf. Der zugehörige Track $T_4$ 835 wird mit dem Mehrfachecho der Bodenreflektion wieder fortgesetzt. Weiterhin werden die bestehenden Tracks in bekannter Art und Weise erweitert.

Zu jedem der zu den Zeitpunkten $t_0 < t_1 < t_2 < t_3 < t_4 < t_5$ durchgeführten Messzyklen liegt im Sensor eine Trackliste vor, welche von der Trackingeinrichtung 7022 bereitgestellt wird, und welche die aktuellen Tracks 83 zum jeweiligen Zeitpunkt beschreibt. Die Trackliste mag beispielsweise aus Vektoren bestehen, welche für jeden Track die Orte des jeweils zugeordneten Echos beschreiben. Es mag aber auch möglich sein, eine speicheroptimierte Darstellung zu verwenden, wie sie beispielsweise in EP 2 309 235 A1 beschrieben wird. Mit dem dort vorgeschlagenen Verfahren wird auch eine Möglichkeit bereitgestellt, einen Track, also eine Abfolge von Echos mit identischem Reflexionsursprung, in zeitliche Abschnitte zu unterteilen, in welchen das zugehörige Echo eine nahezu konstante Geschwindigkeit aufweist.

Im Rahmen der weiteren Signalverarbeitung wird vorzugsweise auf Basis der Tracks 831, 832, 833, 834, 835 eine Analyse auf Mehrfach- und Bodenechos durchgeführt. Als Ergebnis mag eine Klassifikation der erfassten Echos derart erfolgen, dass die Echos des Tracks $T_2$ 833 Mehrfachechos der jeweiligen Echos des Tracks $T_1$ 832 sind, da sich Track $T_2$ gleichmäßig in die identische Richtung bewegt wie Track $T_1$. Weiterhin mag von der Mehrfach- und Bodenechoerkennung 7024 klassifiziert werden, dass die Echos des Tracks $T_3$ den Boden des Behälters beschreiben, da sie sich im Gegentakt zu der Bewegungsrichtung der Füllstandechos des Track $T_1$ bewegen.

Selbstlernen der Permittivitätszahl des Mediums:

Unter Verwendung der Informationen eines erfassten Füllstandtracks $T_1$ 832, welcher Reflexionen der Füllgutoberfläche gruppiert, und eines dazu gehörenden und als solchen klassifizierten Bodentracks $T_3$ 834, welcher Reflexionen des Behälterbodens gruppiert, kann die Selbstlerneinrichtung 7027 erfindungsgemäß auf das Verhältnis der Eigenschaften des Mediums 106 und der Überlagerungsatmosphäre 107 schließen:

$$\frac{\varepsilon_M \cdot \mu_M}{\varepsilon_L \cdot \mu_L} = \left( 1 + \left| \frac{V_B}{V_L} \right| \right)^2$$

wobei $\varepsilon_M$ und $\varepsilon_L$ die Permittivitätszahlen des Mediums und der Überlagerungsatmosphäre und $\mu_M$ und $\mu_L$ die Permeabilitätszahlen des Mediums und der Überlagerungsatmosphäre beschreiben. Weiterhin wird mit $V_B$ die Geschwindigkeit einer Bodenreflektion oder eines Bodenechos beschrieben und mit $V_L$ die Geschwindigkeit einer Füllgutreflexion oder eines Füllgutechos oder eines Füllstandechos.

Die Geschwindigkeiten der jeweiligen Echos können anhand der lokalen Steigung der zugehörigen Tracks $T_1$ 832 und $T_3$ 834 ermittelt werden.

Alternativ kann die Geschwindigkeit $V_E$ eines Echos, eines Tracks oder einer Reflexion aus einer Positionsverschiebung des Echos, Tracks oder der Reflektion zwischen zwei verschiedenen Messzyklen des Füllstandmessgerätes nach folgendem Schema ermittelt werden:

$$V_E = \frac{D_E(t_2) - D_E(t_1)}{t_2 - t_1}$$

wobei:

$D_E(t_2)$    Elektrische Distanz zum Echo, Track oder der Reflektion im Messzyklus 2
$D_E(t_1)$    Elektrische Distanz zum Echo, Track oder der Reflektion im Messzyklus 1
$t_2$    Zeitpunkt, zu welchem Messzyklus 2 durchgeführt wird
$t_1$    Zeitpunkt, zu welchem Messzyklus 1 durchgeführt wird.

Durch Anwendung von Regressionsverfahren können auch mehrere Positionen der Echos eines Tracks verwendet werden, um die Geschwindigkeit eines Echos zu ermitteln. Es mag aber auch möglich sein, die Geschwindigkeit für ganze Abschnitte eines Tracks, in welchen die Geschwindigkeit der Echos nahezu konstant ist, zu ermitteln. Das in EP 2 309 235 A1 beschriebene Verfahren kann zur Überführung eines Tracks in Abschnitte konstanter Geschwindigkeiten verwendet werden. Weiterhin mag es möglich sein, die Geschwindigkeit aus einer Doppleranalyse der Echos zu ermitteln.

Da in einer Vielzahl von Anwendungen die Überlagerungsatmosphäre durch Luft dargestellt wird, kann obiger Zusammenhang näherungsweise zur direkten Erfassung der Medieneigenschaften des Füllgutes verwendet werden:

$$\varepsilon_M \cdot \mu_M = \left(1 + \left|\frac{V_B}{V_L}\right|\right)^2$$

Es sei an dieser Stelle daraufhingewiesen, dass im Gegensatz zu bislang verwendeten Verfahren keinerlei Informationen über die Höhe des Behälters oder einer Domschachtlänge zur Ermittlung der Medieneigenschaften benötigt werden. Weiterhin können die obigen Zusammenhänge auch anhand der Geschwindigkeitsverhältnisse der Mehrfachreflexionen 833 des Füllgutes und der Mehrfachreflexionen 835 des Behälterbodens hergeleitet werden.

Selbstlernen der Domschachtlänge aus der Position zweier Mehrfachechos:

Unter Verwendung der Position eines erfassten und als solchen klassifizierten Mehrfachechos $E_{MLN1}$ 207 der Füllgutreflexion, welches eine elektrische Distanz von $D_{MN1}$ aufweisen soll, sowie der Position eines erfassten und als solchen klassifizierten Mehrfachechos $E_{MLN2}$, welches eine elektrische Distanz von $D_{MN2}$ aufweist, kann die Selbstlerneinrichtung 7027 erfindungsgemäß auf die Länge $d_D$ eines Domschachtes 503, 613 schließen:

$$d_D = \frac{(N_1 + 1) \cdot D_{MN2} - (N_2 + 1) \cdot D_{MN1}}{\sqrt{\varepsilon_L \cdot \mu_L} \cdot (N_1 - N_2)}$$

wobei $N_1$ die Ordnung des Mehrfachechos an der Distanz $D_{MN1}$ und $N_2$ die Ordnung des Mehrfachechos an der Distanz $D_{MN2}$ definieren. Geht man davon aus, dass das Füllgutecho ein Mehrfachecho 0. Ordnung mit einer elektrischen Distanz von $D_L$ ist, so kann die Selbstlerneinrichtung 7027 erfindungsgemäß auch anhand der Füllgutreflexion in Verbindung mit einer weiteren Mehrfachreflektion die Domschachtlänge ermitteln:

$$d_D = \frac{(N_1 + 1) \cdot D_L - D_{MN1}}{\sqrt{\varepsilon_L \cdot \mu_L} \cdot N_1}$$

Geht man weiterhin davon aus, dass als Überlagerungsatmosphäre Luft verwendet wird, so folgt in guter Näherung, dass $\sqrt{\varepsilon_L \cdot \mu_L} = 1$, wodurch sich obige Gleichungen entsprechend vereinfachen lassen.

Selbstlernen der Domschachtlänge aus dem Schnittpunkt zumindest zweier Geschwindigkeitsvektoren von Mehrfachechos:

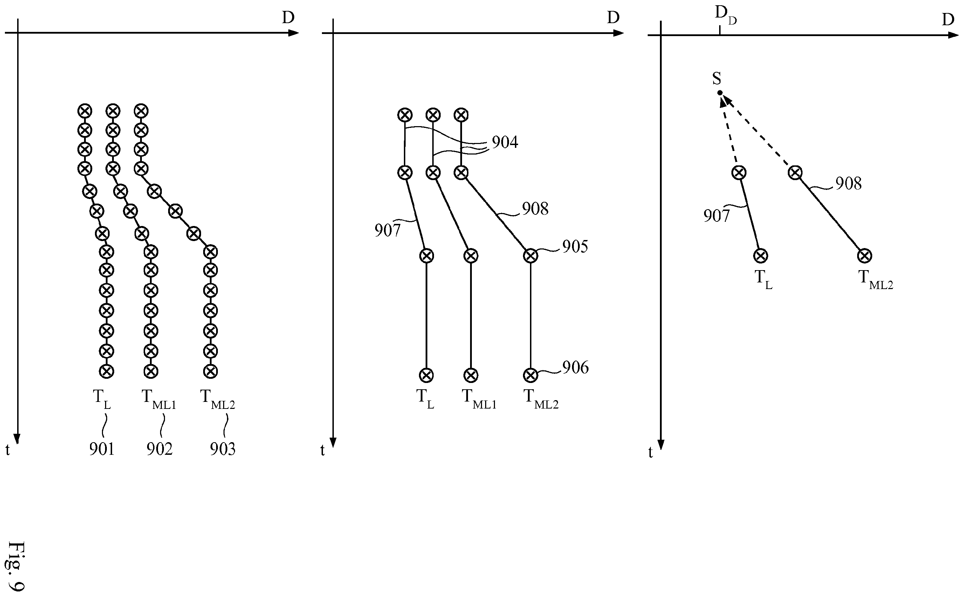

Figur 9 zeigt ein Beispiel für eine Folge von Echos in einer Füllstandmessung entsprechend dem Schema der Trackdarstellung der Figur 8. Das Füllstandmessgerät möge nacheinander verschiedene Echos identifizieren, welche in der Darstellung durch ein ⊕ dargestellt werden mögen. Die Trackingeinrichtung 7022 gruppiert die empfangenen Echos nach ihrer Reflexionsstelle. Auf diese Weise mögen der Track $T_L$ 901, welcher die Echos der Füllgutreflexion gruppiert, der Track $T_{ML1}$ 902, welcher die Echos der ersten Mehrfachreflexion der Füllgutoberfläche gruppiert sowie der Track $T_{ML2}$ 903, welcher die Echos der zweiten Mehrfachreflexion der Füllgutoberfläche repräsentiert, gebildet werden.

In einem ersten, vorteilhaften Verarbeitungsschritt mögen die Tracks in Tracksegmente 904 überführt werden. Die Bildung der Segmente erfolgt derart, dass Messungen, in welchen sich die Echos eines Tracks mit (näherungsweise) konstanter Geschwindigkeit oder gleichem Geschwindigkeitsvektor bewegen, durch eine mathematische Geradengleichung oder durch zwei Stützstellen 905, 906 speicheroptimiert repräsentiert werden können. Offenbarungen zur Durchführung dieses Schrittes finden sich beispielsweise in EP 2 309 235 A1.

Auf Basis der Segmentdarstellung der Tracks kann das Füllstandmessgerät anhand der Selbstlerneinrichtung 7027 zumindest ein im gleichen Zeitraum gültiges Segmentpaar 907, 908 identifizieren, welches einerseits von der gleichen Reflexionsstelle im Behälter verursacht wird, d.h. eine Mehrfachechobeziehung aufweist, und welches gleichzeitig jeweils eine deutliche Steigung größer null besitzt. Die Steigung eines Segments möge äquivalent der Geschwindigkeit der dem Segment zugrunde liegenden Echos sein.

Das identifizierte Segmentpaar 907, 908 wird innerhalb der Selbstlerneinrichtung weiter untersucht. Insbesondere werden die mathematischen Geradengleichungen der selektierten Segmente ermittelt, um auf Basis dieser Gleichungen nach bekannten Verfahren den Schnittpunkt S der beiden Geraden zu berechnen.

Die Distanz D, an welcher sich die beiden Geraden schneiden, entspricht der Domschachtlänge $D_D$ des aktuell zu vermessenden Behälters. Unter Verwendung der Materialeigenschaften der Überlagerungsatmosphäre kann die elektrische Domschachtlänge $D_D$ in die physikalische Domschachtlänge $d_D$ überführt werden. Es gilt:

$$d_D = \frac{D_D}{\sqrt{\varepsilon_L \cdot \mu_L}}$$

Wird als Überlagerungsatmosphäre Luft vorausgesetzt, so entspricht die elektrische Domschachtlänge in guter Näherung der physikalischen Domschachtlänge.

Obige Darstellung einer bevorzugten Ausführungsform verdeutlicht die Funktionsweise des Verfahrens anhand der Bildung von Track und Tracksegmenten. Grundsätzlich lässt sich das Prinzip der offenbarten Erfindung auch anhand einzelner Echos, welche durch eine Klassifikationseinrichtung als Mehrfachechos erkannt worden sind, implementieren. Die mathematischen Geradengleichungen beschreiben den aktuellen Geschwindigkeitsvektor der jeweiligen Echos, und sind in diesem Fall dadurch definiert, dass die Geraden durch den aktuellen Punkt des jeweiligen Echos verlaufen müssen, welcher durch die jeweilige Position und den aktuellen Zeitpunkt definiert sein mag. Weiterhin ist die Steigung der jeweiligen Geraden identisch der momentanen Geschwindigkeit des jeweiligen Echos. Die Geradengleichungen sind damit exakt definiert, und erlauben die mathematische Berechnung des Schnittpunktes S wie oben bereits offenbart.

Die Geschwindigkeit eines Echos kann anhand der lokalen Steigung der zugehörigen Tracks leicht ermittelt werden. Alternativ kann die Geschwindigkeit aus einer Positionsverschiebung zweier Echos eines Tracks ermittelt werden. Durch Anwendung von Regressionsverfahren können auch mehrere Positionen der Echos eines Tracks verwendet werden, um die Geschwindigkeit eines Echos zu ermitteln. Es mag aber auch möglich sein, die Geschwindigkeit für ganze Abschnitte eines Tracks, in welchen die Geschwindigkeit der Echos nahezu konstant ist, zu ermitteln. Weiterhin mag es möglich sein, die Geschwindigkeit aus einer Doppleranalyse der Echos zu ermitteln.

Es sei an dieser Stelle darauf hingewiesen, dass es keine Rolle spielen mag, welche Mehrfachechos für die vorgenannte Berechnung verwendet werden. Es ist insbesondere auch möglich, den Schnittpunkt S anhand einer Geraden 907 oder eines Geschwindigkeitsvektors des Füllgutechos und einer Geraden 908 oder eines Geschwindigkeitsvektors einer Mehrfachreflexion der Füllgutoberfläche zu ermitteln. Weiterhin mag es möglich sein, den Schnittpunkt S anhand einer Geraden 907 einer ersten Mehrfachreflexion der Ordnung N1 und einer Geraden 908 einer weiteren Mehrfachreflexion der Ordnung N2 der Füllgutoberfläche zu ermitteln. Darüber hinaus mag es zur Verbesserung der Genauigkeit oder auch zu Plausibilitätsprüfungen möglich sein, eine Vielzahl von Schnittpunkten verschiedener Mehrfachreflexionen zu berechnen, und deren Position statistisch auszuwerten, beispielsweise durch Mittelung oder Varianzanalysen.

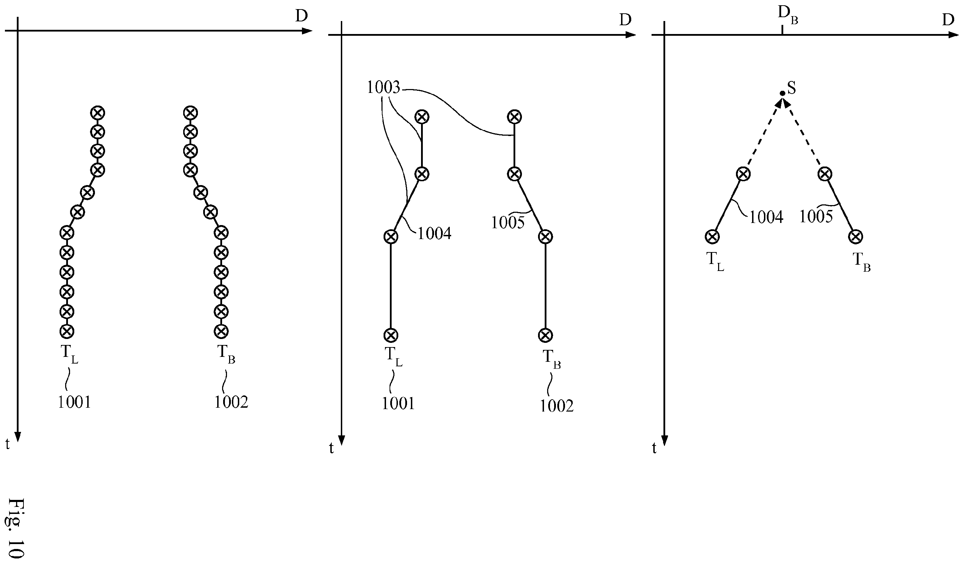

Selbstlernen der Behälterhöhe aus dem Schnittpunkt zumindest eines Geschwindigkeitsvektors eines Füllgutechos und zumindest eines Geschwindigkeitsvektors eines Bodenechos: Figur 10 zeigt wiederum ein Beispiel für eine Folge von Echos in einer Füllstandmessung entsprechend dem Schema der Trackdarstellung der Figur 8. Das erfindungsgemäße Füllstandmessgerät möge nacheinander verschiedene Echos identifizieren, welche in der Darstellung durch ein ⊕ dargestellt werden mögen. Die Trackingeinrichtung 7022 gruppiert die empfangenen Echos nach ihrer Reflexionsstelle. Auf diese Weise mögen der Track $T_L$ 1001, welcher die Echos der Füllgutreflexionen gruppiert, sowie der Track $T_B$ 1002, welcher die Echos der Reflektion am Behälterboden repräsentiert, gebildet werden.

In einem ersten, vorteilhaften Verarbeitungsschritt mögen die Tracks in Tracksegmente 1003 überführt werden. Die Bildung der Segmente erfolgt derart, dass Messungen, in welchen sich die Echos eines Tracks mit (näherungsweise) konstanter Geschwindigkeit oder gleichem Geschwindigkeitsvektor bewegen, durch eine mathematische Geradengleichung oder durch zwei Stützstellen 905, 90 speicheroptimiert repräsentiert werden können. Offenbarungen zur Durchführung dieses Schrittes finden sich beispielsweise in EP 2 309 235 A1.

Auf Basis der Segmentdarstellung der Tracks kann ein erfindungsgemäßes Füllstandmessgerät anhand der Selbstlerneinrichtung 702 zumindest ein zeitgleich auftretendes Segmentpaar 1004, 100 identifizieren, welches jeweils eine deutliche Steigung größer null besitzt. Weiterhin muss genau eines 100 der identifizierten Segmente von einer Reflexion der Füllgutoberfläche 20 verursacht werden, und ein weiteres Segment von einer Reflexion des Behälterbodens 20.

Das identifizierte Segmentpaar 1004, 1005 wird innerhalb der Selbstlerneinrichtung weiter untersucht. Insbesondere werden die mathematische Geradengleichung der selektierten Segmente ermittelt, um auf Basis dieser Gleichungen nach bekannten Verfahren den Schnittpunkt S der beiden Geraden zu berechnen.

Die Distanz D, an welcher sich die beiden Geraden schneiden, entspricht der Höhe $D_B$ des aktuell zu vermessenden Behälters. Unter Verwendung der Materialeigenschaften der Überlagerungsatmosphäre kann die elektrische Distanz zum Behälterboden $D_B$ in die physikalische Distanz zum Behälterboden $d_B$ überführt werden. Es gilt:

$$d_B = \frac{D_B}{\sqrt{\varepsilon_L \cdot \mu_L}}$$

Wird als Überlagerungsatmosphäre Luft vorausgesetzt, so entspricht die elektrische Distanz zum Behälterboden in guter Näherung der physikalischen Distanz zum Behälterboden.

Obige Darstellung einer bevorzugten Ausführungsform verdeutlicht die Funktionsweise des Verfahrens anhand der Bildung von Track und Tracksegmenten. Grundsätzlich lässt sich das Prinzip der offenbarten Erfindung auch anhand einzelner Echos, welche durch eine Klassifikationseinrichtung als Füllstandecho oder Bodenecho erkannt worden sind, implementieren. Die mathematischen Geradengleichungen sind in diesem Fall dadurch definiert, dass die Geraden durch den aktuellen Punkt des jeweiligen Echos verlaufen müssen, welcher durch die jeweilige Position und den aktuellen Zeitpunkt definiert sein mag. Weiterhin ist die Steigung der jeweiligen Geraden identisch der momentanen Geschwindigkeit des jeweiligen Echos. Die Geradengleichungen sind damit exakt definiert, und erlauben die mathematische Berechnung des Schnittpunktes S wie oben bereits offenbart.

Die Geschwindigkeit eines Echos kann anhand der lokalen Steigung der zugehörigen Tracks leicht ermittelt werden. Alternativ kann die Geschwindigkeit aus einer Positionsverschiebung zweier Echos eines Tracks ermittelt werden. Durch Anwendung von Regressionsverfahren können auch mehrere Positionen der Echos eines Tracks verwendet werden, um die Geschwindigkeit eines Echos zu ermitteln. Es mag aber auch möglich sein, die Geschwindigkeit für ganze Abschnitte eines Tracks, in welchen die Geschwindigkeit der Echos nahezu konstant ist, zu ermitteln. Weiterhin mag es möglich sein, die Geschwindigkeit aus einer Doppleranalyse der Echos zu ermitteln.

Ergänzend sei an dieser Stelle erwähnt, dass es keine Rolle spielen mag, welches Paar einer Füllgut- und einer Bodenreflektion für die vorgenannte Berechnung verwendet wird. Weiterhin mag es möglich sein, den Schnittpunkt S anhand einer Geraden 1005 einer ersten Mehrfachreflexion des Behälterbodens und einer Geraden einer weiteren Mehrfachreflexion des Behälterbodens zu ermitteln, wobei sich die Mehrfachreflexionen in ihrer Ordnung unterscheiden. Darüber hinaus mag es zur Verbesserung der Genauigkeit oder auch zu Plausibilitätsprüfungen möglich sein, eine Vielzahl von Schnittpunkten verschiedener Mehrfachreflexionen des Behälterbodens zu berechnen, und deren Position statistisch auszuwerten, beispielsweise durch Mittelung oder Varianzanalysen.

Selbstlernen der Permittivitätszahlen mehrerer Medien bei der Trennschichtmessung anhand der Geschwindigkeiten zumindest zweier Echos:

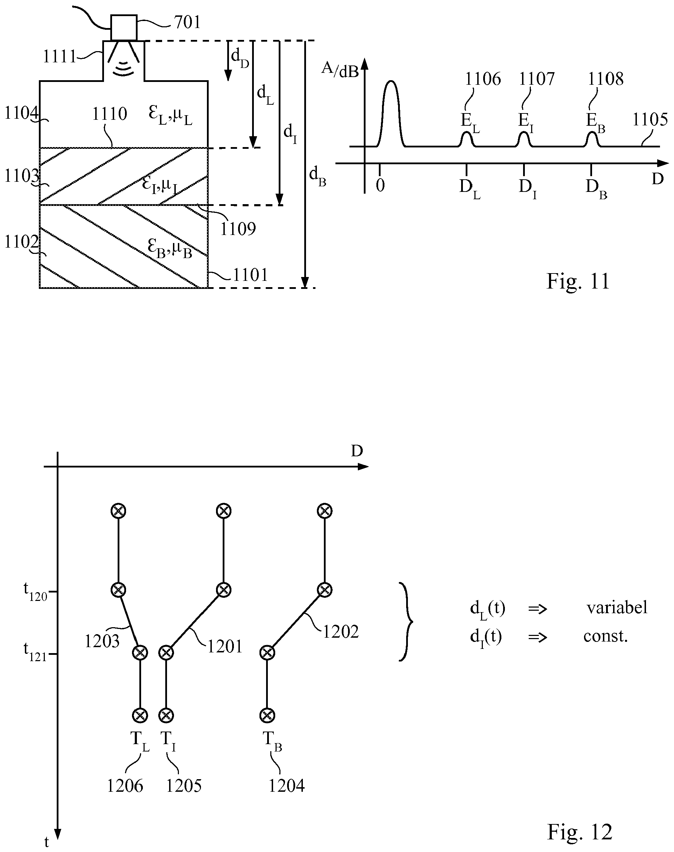

Füllstandsensoren, welche die Lage einer Füllgutoberfläche nach einem Laufzeitverfahren ermitteln, werden in zunehmendem Maße auch zur Bestimmung der Lage einer Trennschicht eingesetzt. Figur 11 zeigt einen solchen Anwendungsfall eines Füllstandmessgerätes. Der Behälter 1101 ist bis zu einer Distanz $d_T$ mit einem unteren Medium 1102 befüllt, dessen Materialeigenschaften mit $\varepsilon_B$ und $\mu_B$ beschrieben sein mögen. Weiterhin ist der Behälter 1101 mit einem oberen Medium 1103 bis zu einer Distanz $d_L$ befüllt, dessen Materialeigenschaften durch $\varepsilon_I$ und $\mu_I$ charakterisiert sein sollen. Die Überlagerungsatmosphäre 1104 möge die Materialeigenschaften $\varepsilon_L$ und $\mu_L$ besitzen. Die von dem Füllstandmessgerät erfasste Echokurve 1105 weist neben dem vom oberen Medium 1103 erzeugten Füllstandecho $E_L$ 1106 und dem vom Behälterboden erzeugten Bodenecho $E_B$ 1108 ein von der Trennschicht 1109 erzeugtes Trennschichtecho $E_I$ 1107 auf, welches eine elektrische Distanz von $D_I$ besitzen möge. Gemäß dem Stand der Technik werden von der Echoidentifikationseinrichtung 7021 die Echos einer jeden erfassten Echokurve identifiziert, woraufhin die Trackingeinrichtung 7022 beispielhaft drei Tracks aufbauen möge. Ein erster Track $T_L$ möge die Echos der Füllgutoberfläche 1110 gruppieren, ein weiterer Track $T_I$ möge die Echos der Trennschicht 1109 repräsentieren. Weiterhin möge ein dritter Track $T_B$ erfasst werden, welcher die Echos des Behälterbodens zusammenfasst.

In Trennschichtanlagen können Mehrfachechos der Füllgutoberfläche nach bekannten Verfahren identifiziert werden. Die Länge des Domschachtes 1111 kann durch die Analyse zweier Mehrfachreflektionen der Füllgutoberfläche nach oben dargestelltem Prinzip ermittelt werden. In besonderen Messsituationen können auch in Trennschichtmessungen darüber hinaus Erkenntnisse über die Eigenschaften des unteren Mediums 1102 sowie des oberen Mediums 1103 gewonnen werden.

Figur 12 zeigt anhand einer Trackdarstellung eine erste spezielle Messsituation, die vom erfindungsgemäßen Füllstandmessgerät 701, und darin insbesondere in der Selbstlerneinrichtung 7027 genutzt wird, um Erkenntnisse über die Eigenschaften der Medien im Behälter zu erlangen.

Im dargestellten Zeitraum zwischen t = $t_{120}$ und t = $t_{121}$ besitzt der Track $T_I$ des Trennschichtechos 1107 die (näherungsweise) gleiche Steigung wie der Track $T_B$ des Bodenechos 1108. Mit anderen Worten besitzen das Bodenecho und das Trennschichtecho im betrachteten Zeitraum die gleiche Geschwindigkeit. Die Geschwindigkeit der Echos kann mit einer der oben dargelegten Methoden leicht ermittelt werden.

Aus diesem Sachverhalt folgert die Selbstlerneinrichtung 7027, dass sich die physikalische Distanz $d_L$ zur Füllgutoberfläche 1110 momentan verändert, wohingegen die physikalische Distanz $d_T$ zur Trennschichtoberfläche 1109 konstant bleibt.

In dieser speziellen Situation einer Stationarität der Trennschichtlage kann aus der momentanen Geschwindigkeit $V_L$ der Füllgutreflexion 1106, 1206, der Geschwindigkeit $V_I$ der Trennschichtreflexion 1107, 1205 und aus der Geschwindigkeit $V_B$ der Bodenreflexion 1108, 1204 folgender Zusammenhang ermittelt werden:

$$\frac{\varepsilon_I \cdot \mu_I}{\varepsilon_L \cdot \mu_L} = \left(1 + \left|\frac{V_I}{V_L}\right|\right)^2 = \left(1 + \left|\frac{V_B}{V_L}\right|\right)^2$$

wobei:

$\varepsilon_I$      Permittivitätszahl des oberen Mediums 1103
$\mu_I$      Permeabilitätszahl des oberen Mediums 1103
$\varepsilon_L$      Permittivitätszahl der Überlagerungsatmosphäre 1104 und
$\mu_L$      Permeabilitätszahl der Überlagerungsatmosphäre 1104 ist.

Für den oft anzutreffenden Fall mit Luft als Überlagerungsatmosphäre gilt folglich in guter Näherung für die Eigenschaften des oberen Mediums 1102:

$$\varepsilon_I \cdot \mu_I = \left(1 + \left|\frac{V_I}{V_L}\right|\right)^2 = \left(1 + \left|\frac{V_B}{V_L}\right|\right)^2$$

Auf Basis dieser Materialeigenschaft ist es fortan möglich die elektrische Distanz $D_I$ der Trennschicht in eine physikalische Distanz $d_I$ umzurechnen.

Die benötigten Geschwindigkeitswerte lassen sich nach jedem der oben beschriebenen Verfahren durch eine entsprechend ausgestaltete Geschwindigkeitsermittlungseinrichtung 7023 ermitteln. Besonders vorteilhaft mag die Ermittlung der Geschwindigkeit anhand einer Segmentdarstellung der Tracks, wie sie in Figur 12 gezeigt wird, sein.

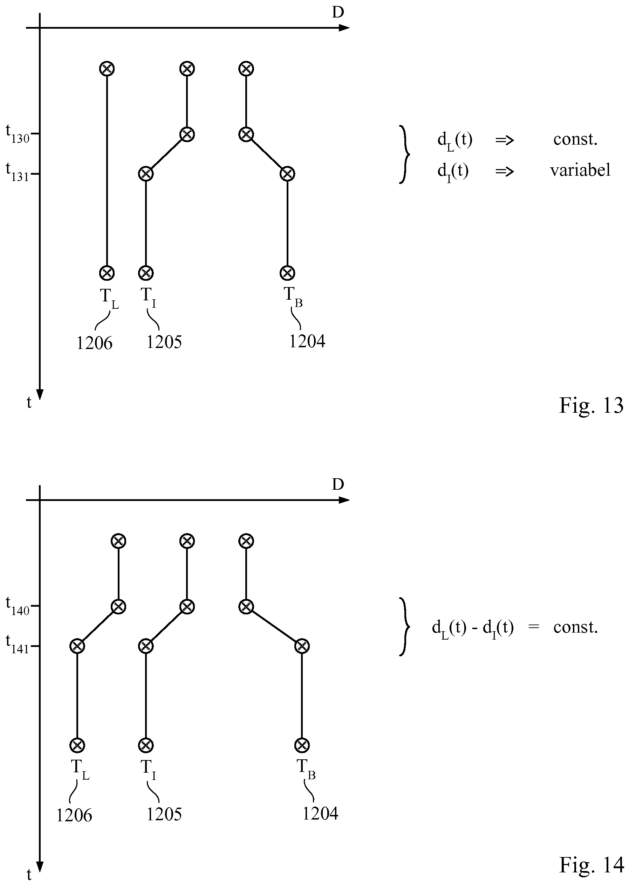

Figur 13 zeigt anhand einer Trackdarstellung eine zweite spezielle Messsituation, die vom erfindungsgemäßen Füllstandmessgerät 701, und darin insbesondere in der Selbstlerneinrichtung 7027 genutzt wird, um Erkenntnisse über die Eigenschaften der Medien im Behälter zu erlangen.

Im dargestellten Zeitraum zwischen t = $t_{130}$ und t = $t_{131}$ weist der Track $T_I$ des Trennschichtechos 1107 eine Steigung ungleich 0 auf. Der Track $T_B$ des Bodenechos 1108 weist ebenfalls eine Steigung ungleich 0 auf, wohingegen der Track $T_L$ des Füllstandechos 1106 eine Steigung von (näherungsweise) 0 aufweist. Mit anderen Worten zeigen das Bodenecho und das Trennschichtecho im betrachteten Zeitraum eine ausgeprägte Bewegung, d.h. sie besitzen eine Geschwindigkeit größer 0, wohingegen das Füllstandecho eine Geschwindigkeit von 0 aufweist. Die Geschwindigkeit der Echos kann mit einer der weiter oben dargelegten Methoden leicht ermittelt werden.

Aus diesem Sachverhalt folgert die Selbstlerneinrichtung 7027, dass sich die physikalische Distanz $d_L$ zur Füllgutoberfläche 1110 momentan nicht verändert, wohingegen die physikalische Distanz $d_I$ zur Trennschichtoberfläche 1109 Änderungen unterworfen ist.

In dieser speziellen Situation der Stationarität der Füllgutoberfläche kann aus der momentanen Geschwindigkeit $V_L$ der Füllgutreflexion 1106, 1206, der Geschwindigkeit $V_I$ der Trennschichtreflexion 1107, 1205 und aus der Geschwindigkeit $V_B$ der Bodenreflexion 1108, 1204 folgender Zusammenhang ermittelt werden:

$$\frac{\varepsilon_B \cdot \mu_B}{\varepsilon_I \cdot \mu_I} = \left(1 + \left|\frac{V_B}{V_I}\right|\right)^2$$

wobei:

$\varepsilon_B$      Permittivitätszahl des unteren Mediums 1102
$\mu_B$      Permeabilitätszahl des unteren Mediums 1102
$\varepsilon_I$      Permittivitätszahl des oberen Mediums 1103 und
$\mu_I$      Permeabilitätszahl des oberen Mediums 1103 ist

Sind die Medieneigenschaften $\varepsilon_I \cdot \mu_I$ des oberen Mediums vorab ermittelt worden, so kann direkt auf die Materialeigenschaften $\varepsilon_B \cdot \mu_B$ des unteren Mediums geschlossen werden, und zwar unabhängig von den Eigenschaften der Überlagerungsatmosphäre.

Die benötigten Geschwindigkeitswerte lassen sich nach jedem der oben beschriebenen Verfahren durch eine entsprechend ausgestaltete Geschwindigkeitsermittlungseinrichtung 7023 ermitteln. Besonders vorteilhaft ist die Ermittlung der Geschwindigkeit anhand einer Segmentdarstellung der Tracks, wie sie in Figur 13 gezeigt wird.

Figur 14 zeigt weiterhin anhand einer Trackdarstellung eine dritte spezielle Messsituation, die vom erfindungsgemäßen Füllstandmessgerät 701, und darin insbesondere in der Selbstlerneinrichtung 7027 genutzt wird, um Erkenntnisse über die Eigenschaften der Medien im Behälter zu erlangen.

Im dargestellten Zeitraum zwischen t = $t_{140}$ und t = $t_{141}$ weist der Track $T_L$ des Füllstandechos 1106 die (näherungsweise) gleiche Steigung auf wie der Track $T_I$ des Trennschichtechos 1107, wobei beide Tracks eine Steigung ungleich 0 besitzen. Der Track $T_B$ des Bodenechos 1108 weist ebenfalls eine Steigung ungleich 0 auf. Mit anderen Worten zeigen das Füllstandecho und das Trennschichtecho im betrachteten Zeitraum eine ausgeprägte gleichförmige und gleich schnelle Bewegung, d.h. sie besitzen beide eine gleiche Geschwindigkeit größer 0. Die Geschwindigkeit der Echos kann mit einer der weiter oben dargelegten Methoden leicht ermittelt werden.

Aus diesem Sachverhalt folgert die Selbstlerneinrichtung 7027, dass die physikalische Dicke des oberen Mediums im betrachteten Zeitraum konstant bleibt:

$$d_L - d_I = const.$$

In dieser speziellen Situation einer konstanten Dicke des oberen Mediums kann aus der momentanen Geschwindigkeit $V_L$ der Füllgutreflexion 1106, 1206, der Geschwindigkeit $V_I$ der Trennschichtreflexion 1107, 1205 und aus der Geschwindigkeit $V_B$ der Bodenreflexion 1108, 1204 folgender Zusammenhang ermittelt werden:

$$\frac{\varepsilon_B \cdot \mu_B}{\varepsilon_L \cdot \mu_L} = \left(1 + \left|\frac{V_B}{V_L}\right|\right)^2 = \left(1 + \left|\frac{V_B}{V_I}\right|\right)^2$$

Für den oft anzutreffenden Fall mit Luft als Überlagerungsatmosphäre gilt folglich in guter Näherung für die Eigenschaften des oberen Mediums 1102:

$$\varepsilon_B \cdot \mu_B = \left(1 + \left|\frac{V_B}{V_L}\right|\right)^2 = \left(1 + \left|\frac{V_B}{V_I}\right|\right)^2$$

Auf Basis dieser Materialeigenschaft ist es fortan möglich, durch die Vermessung der Reflektion des Behälterbodens mittelbar auf die Position der Füllgutoberfläche oder die Position der Trennschichtoberfläche zu schließen.

Die benötigten Geschwindigkeitswerte lassen sich nach jedem der oben beschriebenen Verfahren durch eine entsprechend ausgestaltete Geschwindigkeitsermittlungseinrichtung 7023 ermitteln. Besonders vorteilhaft ist die Ermittlung der Geschwindigkeit anhand einer Segmentdarstellung der Tracks, wie sie in Figur 14 gezeigt wird.

Selbstlernen der Permittivitätszahlen mehrerer Medien bei der Trennschichtmessung anhand der Positionen und der Geschwindigkeiten zumindest zweier Echos

Die bislang offenbarten Verfahren zur Bestimmung von Medieneigenschaften bei der Trennschichtmessung erfordern zumindest eine der drei oben dargestellten Konstellationen einer besonderen Befüllung oder Entleerung eines Behälters. Darüber hinaus ist es aber auch möglich, durch Einbeziehung der Positionen der einzelnen Echos einen allgemeingültigen Zusammenhang herzuleiten, nach dem die Medieneigenschaften oder Materialeigenschaften der Füllgüter 1102, 1103 in einem Behälter berechnet werden können.

Ausgehend von den Verhältnissen der Darstellung der Figur 11 kann für Trennschichtmessungen aus den physikalischen Gesetzmäßigkeiten der elektrischen Distanzen und den Geschwindigkeiten der erfassten Echos allgemeingültig hergeleitet werden:

$$\varepsilon_I \cdot \mu_I = \left( \frac{V_L - V_I + \frac{D_I - D_L}{D_B - D_I} \cdot (V_B - V_I)}{\left( d_B - \frac{D_L}{\sqrt{\varepsilon_L \cdot \mu_L}} \right) \cdot \frac{V_B - V_I}{D_B - D_I} + \frac{V_L}{\sqrt{\varepsilon_L \cdot \mu_L}}} \right)^2$$

und weiterhin:

$$\varepsilon_B \cdot \mu_B = \left( \frac{D_B - D_I}{\left( d_B - \frac{D_I}{\sqrt{\varepsilon_I \cdot \mu_I}} \right) + \frac{\sqrt{\varepsilon_L \cdot \mu_L} - \sqrt{\varepsilon_I \cdot \mu_I}}{\sqrt{\varepsilon_L \cdot \mu_L \cdot \varepsilon_I \cdot \mu_I}} \cdot D_L} \right)^2$$

wobei:

$\varepsilon_B$    Permittivitätszahl des unteren Mediums 1102

$\mu_B$    Permeabilitätszahl des unteren Mediums 1102

$\varepsilon_I$    Permittivitätszahl des oberen Mediums 1103

$\mu_I$    Permeabilitätszahl des oberen Mediums 1103

$\varepsilon_L$    Permittivitätszahl der Überlagerungsatmosphäre 1104

$\mu_L$    Permeabilitätszahl der Überlagerungsatmosphäre 1104

$D_B$    elektrische Distanz zum Echo $E_B$ 1108 des Behälterbodens

$D_I$    elektrische Distanz zum Echo $E_I$ 1107 der Trennschicht 1109

$D_L$    elektrische Distanz zum Echo $E_L$ 1106 der Oberfläche 1110

$V_B$    Geschwindigkeit des Echos $E_B$ 1108 des Behälterbodens

$V_I$    Geschwindigkeit des Echos $E_I$ 1107 der Trennschicht 1109

$V_L$    Geschwindigkeit des Echo $E_L$ 1106 der Oberfläche 1110 und

$d_B$    Distanz vom Füllstandmessgerät zum Behälterboden ist.

Die Distanz $d_B$ vom Füllstandmessgerät zum Behälterboden kann im Rahmen der Inbetriebnahme beispielsweise vom Kunden eingegeben werden, und ist damit bekannt. Weiterhin entspricht diese Distanz bei Geräten nach dem Prinzip der geführten Mikrowelle der Länge des Seiles oder der Sonde, an welcher die Mikrowellen zum Medium hin entlanggeführt werden, weshalb der Wert bereits im Werk voreingestellt werden kann. Darüber hinaus wird in einer Vielzahl an Anwendungen Luft als Überlagerungsatmosphäre verwendet, was zur Folge hat, dass sich $\sqrt{\varepsilon_L \cdot \mu_L}$ in obigen Gleichungen in guter Näherung durch den Wert 1 ersetzen lässt.

Die benötigten Geschwindigkeitswerte lassen sich nach jedem der oben beschriebenen Verfahren durch eine entsprechend ausgestaltete Geschwindigkeitsermittlungseinrichtung 702 ermitteln. Besonders vorteilhaft ist die Ermittlung der Geschwindigkeit anhand einer Segmentdarstellung der Tracks, wie sie in Figur 14 gezeigt wird.

Unter Verwendung obiger Gleichungen ist es erstmals auch in Trennschichtanlagen möglich, die Permittivitätszahlen und die Permeabilitätszahlen der im Behälter vorhandenen Medien automatisiert anhand einer einzigen Laufzeitmessung zu erfassen. Die Werte können fortan zur Überführung der elektrischen Distanzen in die zugehörigen physikalischen Distanzen verwendet werden. Darüber hinaus ist eine mittelbare Messung des Füllstandes mit der Kenntnis der Materialeigenschaften möglich.

In der vorliegenden Erfindung werden unterschiedliche Verfahren zur Ermittlung von Behälter- und/oder Medieneigenschaften unter Verwendung eines erfindungsgemäßen Füllstandmessgerätes vorgestellt. Vielen Verfahren gemein ist die vorab durchzuführende Klassifikation oder Bewertung von Echos als Mehrfachecho oder Bodenecho. Mit erfolgter Klassifikation lassen sich vornehmlich unter Verwendung der Geschwindigkeiten einzelner Echos oder einer Gruppe von Echos Kennwerte des Behälters und/oder der darin enthaltenen Medien herleiten. Es ist hierbei möglich, dass die Bestimmung der Geschwindigkeit eines Echos auf verschiedenerlei Arten, insbesondere gemäß den in dieser Offenbarung beschriebenen Methoden erfolgt.

Es ist weiterhin zu beachten, dass die vorliegende technische Lehre für die Füllstandmessung nach dem FMCW-Prinzip ebenso geeignet ist wie für die Füllstandmessung nach dem Prinzip der geführten Mikrowelle, dem Ultraschallprinzip, dem Laserprinzip oder einem anderen Laufzeitverfahren.

In der vorliegenden Beschreibung wird davon ausgegangen, dass die Analyse der Medieneigenschaften lediglich das Produkt aus Permeabilitätszahl und Permittivitätszahl des betreffenden Mediums bereitstellen kann. Da für eine Vielzahl an Medien in guter Näherung die Permeabilitätszahl zu eins gesetzt werden kann, können alle beschriebenen Verfahren in guter Näherung auch zur direkten Erfassung der Permittivitätszahl eines Mediums verwendet werden.

Weiterhin ist die Bestimmung der Domschachtlänge sowie der Behälterhöhe beschrieben. Es sei an dieser Stelle daraufhingewiesen, dass sich beide Größen innerhalb der Signalverarbeitung des Sensors geringfügig von den physikalisch nachmessbaren Größen unterscheiden können. Zum einen kann der Nullpunkt des Sensors durch Parametrierung verändert werden. Weiterhin kann beispielsweise die Höhe eines Behälters in einer Anwendung inklusive eines darauf montierten Domschachtes definiert sein, in anderen Anwendungen wie im Fall einer negativen Domschachtlänge mag diese Definition so keinen Sinn ergeben. Im Rahmen der vorliegenden Erfindung sollen daher mit den betreffenden Größen Zahlenwerte definiert sein, die in einer Beziehung zu den physikalischen Größen stehen, und anhand derer spezielle Verfahren, insbesondere eine mittelbare Messung der Füllgutlage, realisiert werden können.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät, das nach einem Laufzeitverfahren arbeitet und welches zur Bestimmung der Position eines Füllstandes, eines Füllgutes und/oder einer Trennschicht zwischen zwei Füllgütern in einem Behälter elektromagnetische oder akustische Wellen in Richtung einer Füllgutoberfläche emittiert, das Füllstandmessgerät (701) aufweisend:

   eine Echokurvenerfassungseinrichtung (104) zum Erfassen mehrerer Echokurven;
   eine Echoidentifikationseinrichtung (7021) zur Identifikation von zumindest zwei Echos in jeweils zumindest zwei Echokurven;
   eine Geschwindigkeitsermittlungseinrichtung (7023) zur Ermittlung von Geschwindigkeitswerten der zumindest zwei Echos, wobei der Geschwindigkeitswert eines Echos aus einer Positionsverschiebung des Echos zwischen zwei verschiedenen Messzyklen des Füllstandmessgerätes ermittelbar ist;
   **dadurch gekennzeichnet, dass** das Füllstandmessgerät weiterhin eine Einrichtung (7027) zur automatischen Berechnung einer Domschachtlänge eines im Scheitelbereich des Behälters angeordneten Doms, unter Verwendung der ermittelten Geschwindigkeitswerte eines Füllgutechos und eines Echos einer Mehrfachreflexion an der Füllgutoberfläche, der Behälterhöhe des Behälters, unter Verwendung der ermittelten Geschwindigkeitswerte des Füllgutechos und eines Bodenechos vom Behälterboden, oder des Produktes aus der Permeablilitätszahl des Füllgutes und der Permittivitätszahl des Füllgutes, unter Verwendung der ermittelten Geschwindigkeitswerte des Füllgutechos und des Bodenechos, aufweist.

2. Füllstandmessgerät nach Anspruch 1, weiterhin aufweisend:

   eine Mehrfachechoerkennungseinrichtung (7024) zur Klassifizierung zumindest eines Echos einer Mehrfachreflexion an der Füllgutoberfläche, einer Störstelle und/oder am Behälterboden in der Echokurve als Mehrfachecho;
   wobei die Einrichtung (7027) zur Verwendung zumindest eines Geschwindigkeitswerts eines von der Mehrfachechoerkennungseinrichtung klassifizierten Mehrfachechos zur Ermittlung eines Kennwertes ausgeführt ist.

3. Füllstandmessgerät nach einem der vorhergehenden Ansprüche,

eine Bodenechoerkennungseinrichtung (7024) zur Klassifizierung zumindest eines Echos einer Reflexion an einer Störstelle und/oder dem Behälterboden in der Echokurve als Bodenecho; wobei die Einrichtung (7027) zur Verwendung zumindest eines Geschwindigkeitswerts eines von der Bodenechoerkennungseinrichtung klassifizierten Bodenechos oder eines Trennschichtechos zur Ermittlung des Kennwertes ausgeführt ist.

4. Füllstandmessgerät nach Anspruch 3,
wobei die Einrichtung (7027) das Produkt aus der Permeablilitätszahl des Füllgutes und der Permittivitätszahl des Füllgutes durch Anwendung der folgenden Formel

$$\frac{\varepsilon_M \cdot \mu_M}{\varepsilon_L \cdot \mu_L} = \left(1 + \left|\frac{V_B}{V_L}\right|\right)^2$$

ermittelt;
wobei $\varepsilon_M$ die Permittivitätszahl des Füllgutes, $\varepsilon_L$ die Permittivitätszahl einer Überlagerungsatmosphäre, $\mu_M$ die Permeabilitätszahlen des Füllgutes, $\mu_L$ die Permeabilitätszahlen der Überlagerungsatmosphäre, $V_B$ die Geschwindigkeit eines Bodenechos und $V_L$ die Geschwindigkeit eines Füllgutechos beschreiben.

5. Füllstandmessgerät nach einem der vorhergehenden Ansprüche,
wobei die Einrichtung (7027) zur Ermittlung der Permittivitätszahlen des Füllgutes und/oder eines weiteren Mediums in dem Behälter anhand der Geschwindigkeitswerte der zumindest zwei Echos ausgeführt ist.

6. Füllstandmessgerät nach einem der vorhergehenden Ansprüche,
ausgeführt zur Ermittlung der Permittivitätszahlen und der Permeabilitätszahlen des Füllgutes und/oder eines weiteren Mediums im Behälter anhand einer einzigen Laufzeitmessung.

7. Verfahren zur Bestimmung der Position eines Füllstandes, eines Füllgutes und/oder einer Trennschicht zwischen zwei Füllgütern in einem Behälter nach einem Laufzeitverfahren, das Verfahren aufweisend die Schritte:

Emittieren elektromagnetischer oder akustischer Wellen in Richtung einer Füllgutoberfläche;
Erfassen mehrerer Echokurven;
Identifizieren von zumindest zwei Echos in jeweils zumindest zwei Echokurven;
Ermitteln von Geschwindigkeitswerten der zumindest zwei Echos, wobei der Geschwindigkeitswert eines Echos aus einer Positionsverschiebung des Echos zwischen zwei verschiedenen Messzyklen des Füllstandmessgerätes ermittelbar ist;
**gekennzeichnet durch** automatische Berechnung einer Domschachtlänge eines im Scheitelbereich eines Behälters angeordneten Doms, unter Verwendung der ermittelten Geschwindigkeitswerte eines Füllgutechos und eines Echos einer Mehrfachreflexion an der Füllgutoberfläche, der Behälterhöhe eines Behälters, unter Verwendung der ermittelten Geschwindigkeitswerte des Füllgutechos und eines Bodenechos vom Behälterboden, oder des Produktes aus der Permeablilitätszahl des Füllgutes und der Permittivitätszahl des Füllgutes, unter Verwendung der ermittelten Geschwindigkeitswerte des Füllgutechos und des Bodenechos.

8. Programmelement, das, wenn es auf einem Prozessor eines Füllstandmessgeräts ausgeführt wird, den Prozessor anleitet, die Schritte nach Anspruch 7 durchzuführen.

9. Computerlesbares Medium zum Speichern eines Programmelements, das, wenn es auf einem Prozessor eines Füllstandmessgeräts ausgeführt wird, den Prozessor anleitet, die Schritte nach Anspruch 7 durchzuführen.

**Claims**

1. A fill level measuring device, which operates according to a transit time method and emits electromagnetic or acoustic waves in the direction of a filling material surface for determining the position of a fill level, of a filling material and/or of an interface between two filling materials in a container, with the fill level measuring device (701) comprising:

an echo-curve acquisition device (104) for acquiring a plurality of echo curves;
an echo identification device (7021) for identifying at least two echoes in at least two echo curves;
a speed determination device (7023) for determining speed values of the at least two echoes, wherein the speed value of an echo can be determined from a position shift of the echo between two different measuring cycles of the fill level measuring device;
**characterized in that** the fill level measuring device further comprises a device (7027) for automatically calculating a length of a dome shaft of a dom, which is arranged at the apex of the container, with the use of the determined speed value of a filling material echo and an echo of a multiple reflection from the filling material surface, the container height of the container, with the use of the determined speed values of the filling material echo and a bottom echo of the container bottom, or the product of the permeability value of the filling material and the permittivity value of the filling material, with the use of the determined speed values of the filling material echo and the bottom echo.

2. The fill level measuring device according to claim 1, further comprising:

a multiple-echo recognition device (7024) for classifying at least one echo of a multiple reflection from a filling material surface, from a fault location and/or from the container bottom in the echo curve as a multiple echo;
wherein the device (7027) is designed for use of at least one speed value of a multiple echo classified by the multiple-echo recognition device for determining a characteristic value.

3. The fill level measuring device according to one of the preceding claims:

a bottom-echo recognition device (7024) for classifying at least one echo of a reflection from a fault location and/or the container bottom in the echo curve as a bottom echo;
wherein the device (7027) is designed for using at least one speed value of a bottom echo, classified by the bottom-echo recognition device, or of an interface echo, for determining the characteristic value.

4. The fill level measuring device according to claim 3, wherein the device (7027) determines the product of the permeability value of the filling material and of the permittivity value of the filling material by applying the following equation:

$$\frac{\varepsilon_M \cdot \mu_M}{\varepsilon_L \cdot \mu_L} = \left(1 + \left|\frac{V_B}{V_L}\right|\right)^2$$

wherein $\varepsilon_M$ denotes the permittivity value of the filling material, $\varepsilon_L$ the permittivity value of an overlay atmosphere, $\mu_M$ the permeability values of the filling material, $\mu_L$ the permeability values of the overlay atmosphere, $V_B$ the speed of a bottom echo, and $V_L$ the speed of a filling material echo.

5. The fill level measuring device according to any one of the preceding claims, wherein the device (7027) is designed for determining the permittivity values of the filling material and/or of a further medium in the container by means of the speed values of the at least two echoes.

6. The fill level measuring device according to claim 7, designed for determining the permittivity values and the permeability values of the filling material and/or of a further medium in the container by means of a single transit time measurement.

7. A method for determining the position of a fill level, of a filling material and/or of an interface between two filling materials in a container according to a transit time method, the method comprising the steps of:

emitting electromagnetic or acoustic waves in the direction of a filling material surface;
acquiring a plurality of echo curves;
identifying at least two echoes in at least two echo curves;
determining speed values of the at least two echoes, wherein the speed value of an echo can be determined from a position shift of the echo between two different measuring cycles of the fill level measuring device;
**characterized in** automatically calculating a length of a dome shaft of a dom, which is arranged at the apex of the container, with the use of the determined speed value of a filling material echo and an echo of a multiple reflection from the filling material surface, of the container height of the container, with the use of the determined speed values of the filling material echo and a bottom echo of the container bottom, or of the product of the permeability value of the filling material and the permittivity value of the filling material, with the use of the determined speed values of the filling material echo and the bottom echo.

8. A program element which, when executed on a processor of a fill level measuring device, instructs the processor to carry out the steps according to claim 7.

9. A computer-readable medium for storing a program element which, when executed on a processor of a fill level measuring device, instructs the processor to carry out the steps according to claim 7.

**Revendications**

1. Appareil de mesure de niveau de remplissage fonctionnant selon un procédé de temps de parcours et émettant dans la direction d'une surface de matériau de remplissage des ondes électromagnétiques ou acoustiques afin de mesurer la position d'un niveau de remplissage, d'un matériau de remplissage et/ou d'une couche de séparation entre deux matériaux de remplissage dans un récipient, l'appareil de mesure de niveau de remplissage (701) comportant :

   un dispositif de saisie de courbe d'écho (10a) pour saisir plusieurs courbes d'écho ;
   un dispositif d'identification d'écho (7021) pour identifier au moins deux échos dans au moins deux courbes d'écho respectives ;
   un dispositif de détermination de vitesse (7023) pour déterminer les valeurs de vitesse des aux moins deux échos, dans lequel la valeur de vitesse d'un écho peut être déterminée à partir d'un décalage de position de l'écho entre deux cycles de mesures différents de l'appareil de mesure de niveau de remplissage ;
   **caractérisé en ce que** l'appareil de mesure de niveau de remplissage comporte en outre un dispositif (7027) pour calculer automatiquement une longueur de regard d'un dôme agencé dans une zone supérieure, en utilisant les valeurs de vitesse mesurées d'un écho de matériau de remplissage et d'un écho d'une réflexion multiple sur la surface de matériau de remplissage, la hauteur de récipient du récipient, en utilisant les valeurs de vitesse mesurées d'un écho de matériau de remplissage et d'un écho du fond du récipient, ou le produit à partir de la perméabilité du matériau de remplissage et de la permittivité du matériau de remplissage, en utilisant les valeurs de vitesse mesurées d'un écho de matériau de remplissage et d'un écho du fond du récipient.

2. Appareil de mesure de niveau de remplissage selon la revendication 1, comportant en outre :

   un dispositif de reconnaissance d'écho multiple (7024) pour catégoriser au moins un écho d'une réflexion multiple sur la surface de matériau de remplissage, sur un obstacle et/ou sur le fond de récipient dans la courbe d'écho en tant qu'écho multiple ;
   dans lequel le dispositif (7027) est réalisé pour utiliser au moins une valeur de vitesse d'un écho multiple catégorisé par le dispositif de reconnaissance d'écho multiple pour déterminer une valeur caractéristique.

3. Appareil de mesure de niveau de remplissage selon l'une des revendications précédentes, comportant en outre :

   un dispositif de reconnaissance d'écho de fond (7024) pour catégoriser au moins un écho d'une réflexion sur un obstacle et/ou sur le fond de récipient dans la courbe d'écho en tant qu'écho de fond ;
   dans lequel le dispositif (7027) est réalisé pour utiliser au moins une valeur de vitesse d'un écho de fond ou d'un écho de couche de séparation catégorisé par le dispositif de reconnaissance d'écho de fond pour déterminer une valeur caractéristique.

4. Appareil de mesure de niveau de remplissage selon la revendication 3,
   dans lequel le dispositif (7027) détermine le produit à partir de la perméabilité du matériau de remplissage et de la permittivité du matériau de remplissage par utilisation de la formule suivante :

$$\frac{\varepsilon_M \cdot \mu_M}{\varepsilon_L \cdot \mu_L} = \left(1 + \left|\frac{V_B}{V_L}\right|\right)^2$$

dans lequel $\varepsilon_M$ est la permittivité du matériau de remplissage, $\varepsilon_L$ la permittivité d'une atmosphère superposée, $\mu_M$ la perméabilité du matériau de remplissage, $\mu_L$ la perméabilité de l'atmosphère superposée, $V_B$ la vitesse d'un écho de fond et $V_L$ la vitesse d'un écho de matériau de remplissage.

5. Appareil de mesure de niveau de remplissage selon l'une des revendications précédentes, dans lequel le dispositif (7027) est réalisé pour déterminer les permittivités du matériau de remplissage et/ou d'un milieu supplémentaire dans le récipient à l'aide des valeurs de vitesses des au moins deux échos.

6. Appareil de mesure de niveau de remplissage selon l'une des revendications précédentes, réalisé pour déterminer les permittivités du matériau de remplissage et/ou d'un milieu supplémentaire dans le récipient à l'aide d'une unique mesure de temps de parcours.

7. Procédé de mesure de la position d'un niveau de remplissage, d'un matériau de remplissage et/ou d'une couche de séparation entre deux matériaux de remplissage dans un récipient, le procédé comprenant les étapes de :

émission d'ondes électromagnétiques ou acoustiques dans la direction d'une surface de matériau de remplissage ;
saisie de plusieurs courbes d'écho ;
identification d'au moins deux échos dans au moins deux courbes d'écho respectives ;
détermination des valeurs de vitesse des aux moins deux échos, dans lequel la valeur de vitesse d'un écho peut être déterminée à partir d'un décalage de position de l'écho entre deux cycles de mesures différents de l'appareil de mesure de niveau de remplissage ;
**caractérisé par** le calcul automatiquement de la longueur de regard d'un dôme agencé dans une zone supérieure, en utilisant les valeurs de vitesse mesurées d'un écho de matériau de remplissage et d'un écho d'une réflexion multiple sur la surface de matériau de remplissage, la hauteur de récipient d'un récipient, en utilisant les valeurs de vitesse mesurées d'un écho de matériau de remplissage et d'un écho de fond d'un récipient, ou le produit à partir de la perméabilité du matériau de remplissage et de la permittivité du matériau de remplissage, en utilisant les valeurs de vitesse mesurées d'un écho de matériau de remplissage et d'un écho de fond de récipient.

8. Élément de programme qui, lorsqu'il est mis en œuvre sur un processeur d'un appareil de mesure de niveau de remplissage, mène le processeur à exécuter les étapes selon la revendication 7.

9. Support lisible par ordinateur destiné à enregistrer un élément de programme qui, lorsqu'il est mis en œuvre sur un processeur d'un appareil de mesure de niveau de remplissage, mène le processeur à exécuter les étapes selon la revendication 7.

Fig. 1

Fig. 2

Fig. 3

Fig. 4

Fig. 5

Fig. 6

Fig. 7

Fig. 8

Fig. 9

Fig. 10

Fig. 11

$$d_L(t) \Rightarrow \text{variabel}$$
$$d_I(t) \Rightarrow \text{const.}$$

Fig. 12

$$d_L(t) \Rightarrow const.$$
$$d_I(t) \Rightarrow variabel$$

Fig. 13

$$d_L(t) - d_I(t) = const.$$

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009037000 A
- EP 2309235 A1